# EUROPEAN PATENT SPECIFICATION

(11) **EP 4 174 111 B1**
(45) Date of publication and mention of the grant of the patent: **15.01.2025**
(21) Application number: 21205492.8
(22) Date of filing: 29.10.2021
(51) Int. Cl.: C08G 65/40, C08G 65/00

(54) **COPOLYMERS DERIVED FROM DICYCLOPENTADIENE**
VON DICYCLOPENTADIEN ABGELEITETE COPOLYMERE
COPOLYMÈRES DÉRIVÉS DU DICYCLOPENTADIÈNE

(43) Date of publication of application: 03.05.2023
(73) Proprietor: SHPP Global Technologies B.V., 4612 PX Bergen op Zoom (NL)
(72) Inventor: Sista, Prakash, Mt Vernon (US); Tarkin-Tas, Eylem, Selkirk (US); Agrawal, Mukesh, Bangalore (IN); Chowdhury, Rajesh, Bangalore (IN); Kenchaiah, Lohith, Bangalore (IN)
(74) Representative: Balder IP Law, S.L.

(56) References cited:
- JP-A- H07 109 338

## Description

### BACKGROUND

This disclosure relates to copolymers derived from dicyclopentadiene, methods of forming the same, curable thermosetting compositions including the same, and articles derived therefrom.

Thermosetting resins are materials that cure to form extremely hard plastics. These materials that can be used in a wide variety of consumer and industrial products. For example, thermosets are used in protective coatings, adhesives, electronic laminates (such as those used in the fabrication of computer circuit boards), flooring, and paving applications, glass fiber-reinforced pipes, and automotive parts (including leaf springs, pumps, and electrical components).

Poly(phenylene ether) oligomers can improve dielectric performance, heat resistance, flame resistance and moisture absorption of thermoset materials, making them particularly well suited for a variety of applications, particularly electronic applications. JPH07109338A discloses novel bisphenol A-dicyclopentadiene polycondensates useful as electronic device sealant.
Dicyclopentadiene is known to contribute to excellent moisture resistance and a dramatic reduction in dielectric constant without detrimentally affecting thermal performance. It would therefore be advantageous to provide a composition having a combination of a poly(phenylene ether) oligomer and dicyclopentadiene with reduced dielectric performance for use in curable thermosetting compositions.

### BRIEF DESCRIPTION

A copolymer comprises a polyphenylene ether component and a dicyclopentadiene copolymer component comprising a structure of Formulas D1, D2, D3-1, D3-2, or D3-3 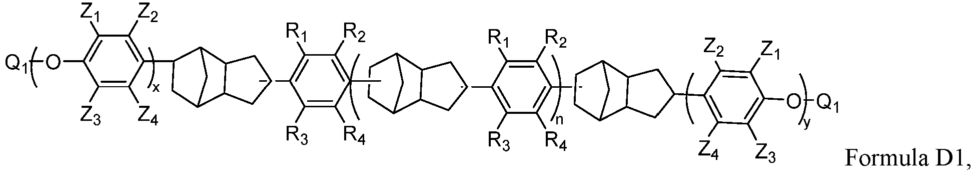 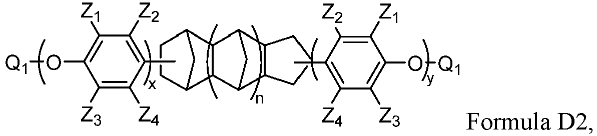 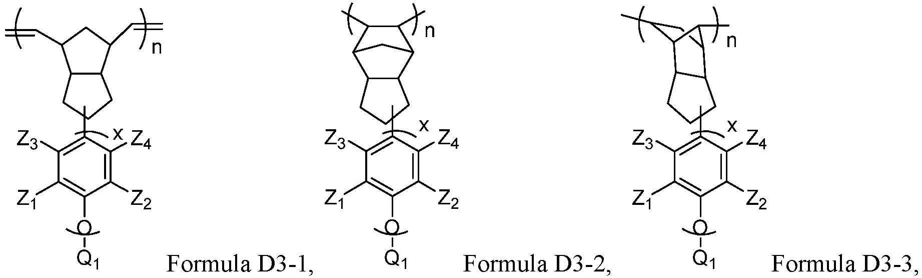 wherein Z₁ and Z₃ each independently comprise halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; Z₂ and Z₄ each independently comprise hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; R₁ to R₄ each independently comprise hydrogen, C₁-C₁₂ hydrocarbyl, or C₁-C₁₂ hydrocarbyloxy; x is 1 to 50; y is 1 to 50; n 1 to 100; and Q₁ comprises a single bond, hydrogen, or a terminal functional group.

A curable composition comprises the copolymer.

A cured thermoset composition comprises a cured product of the curable thermosetting composition.

An article comprises the cured thermoset composition.

An article is manufactured from a varnish composition comprising the curable thermosetting composition and a solvent.

The above described and other features are exemplified by the following figures and detailed description.

### BRIEF DESCRIPTION OF THE DRAWINGS

The following figures are exemplary embodiments wherein the like elements are numbered alike.

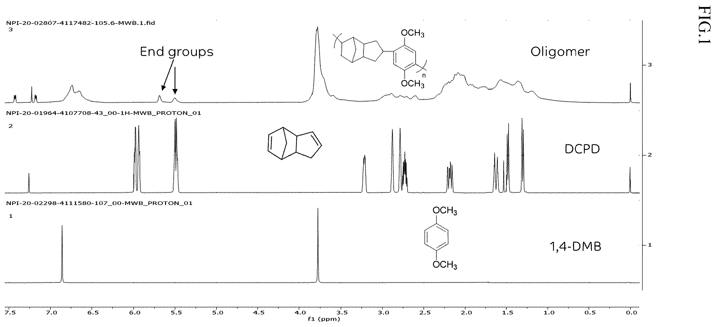

FIG.1 shows an overlay of the proton NMR spectra of the copolymer prepared according to Example 1, dicyclopentadiene, and 1,4-dimethoxy benzene.

### DETAILED DESCRIPTION

The present inventors have discovered that the copolymers can be prepared from a phenylene ether oligomer and a dicyclopentadiene copolymer. The copolymers can advantageously provide a desirable combination of dielectric properties, flame resistance, and heat performance while maintaining compatibility between the phenylene ether component and the dicyclopentadiene copolymer component of Formulas D1, D2, D3-1, D3-2, or D3-3.

. The copolymers can be particularly useful in curable thermosetting compositions.

The copolymers comprise a polyphenylene ether block and a dicyclopentadiene copolymer component comprising a structure of Formulas D1, D2, D3-1, D3-2, or D3-3 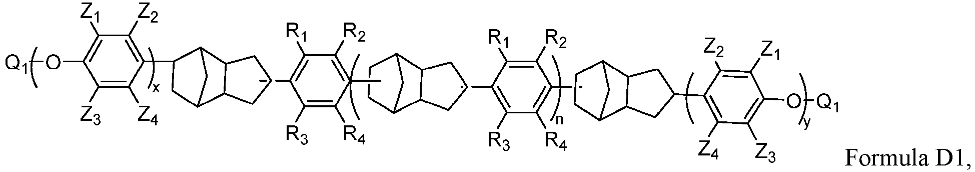 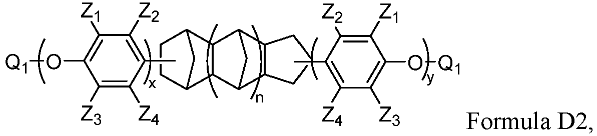 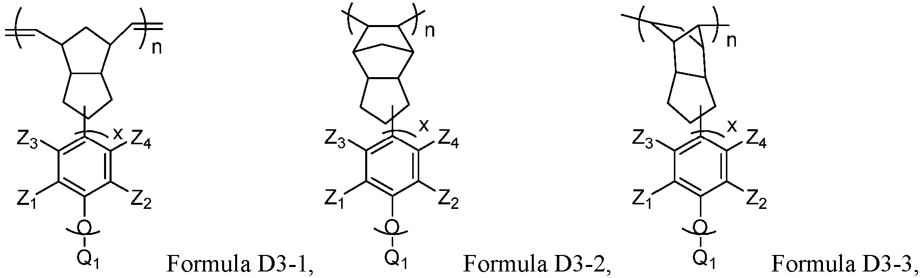 wherein Z¹ and Z³ independently comprises halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; Z² and Z⁴ independently comprises hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; R₁ to R₄ independently comprises hydrogen, C₁-C₁₂ hydrocarbyl, or C₁-C₁₂ hydrocarbyloxy; x is 1 to 50; y is 1 to 50; n 1 to 100; and Q₁ comprises a single bond, hydrogen, or a terminal functional group.

In some aspects, Z₁ and Z₃ independently comprises halogen, unsubstituted or substituted alkyl, phenyl, cycloalkyl, bicycloalkyl, or alkoxy, wherein at least two carbon atoms separate the halogen and oxygen atoms; Z₂ and Z₄ independently comprise hydrogen, halogen, unsubstituted or substituted alkyl, phenyl, cycloalkyl, bicycloalkyl, or alkoxy wherein at least two carbon atoms separate the halogen and oxygen atoms; R₁ to R₄ independently comprise hydrogen, alkyl, alkenyl, or alkoxy; x is 1 to 50; y is 1 to 50; n 1 to 100; and Q₁ comprises a single bond, hydrogen, or a terminal functional group.

In some aspects, Z₁ and Z₃ each independently comprise halogen, unsubstituted or substituted alkyl, phenyl, cycloalkyl, bicycloalkyl, or alkoxy, wherein at least two carbon atoms separate the halogen and oxygen atoms; Z₂ and Z₄ each independently comprise hydrogen; R₁ to R₄ each independently comprise hydrogen, alkyl, alkenyl, or alkoxy; x is 1 to 50; y is 1 to 50; n 1 to 100; and Q₁ comprises a single bond, hydrogen, or a terminal functional group.

In any of the foregoing aspects, R₂ and R₃ are each hydrogen. In some aspects, R₁ and R₄ are each independently methoxy, isopropyl, t-butyl, vinyl or allyl and R₂ and R₃ are each hydrogen.

In some aspects, Z₁ and Z₃ independently comprise methyl; Z₂ and Z₄ independently comprise hydrogen; R₁ to R₄ independently comprises hydrogen, methyl, isopropyl, vinyl, allyl, or methoxy; x is 1 to 50; y is 1 to 50; n 1 to 100; and Q₁ comprises a single bond, hydrogen, or a terminal functional group. In some aspects, Z¹ and Z³ independently comprise methyl; Z₂ and Z₄ independently comprise hydrogen; R₁ and R₄ are each methoxy, and R₂ and R₃ are each hydrogen. In some aspects, Z₁ and Z₃ independently comprise methyl; Z₂ and Z₄ independently comprise hydrogen; R₁ is methyl, R₄ is isopropyl, and R₂ and R₃ are each hydrogen. In some aspects, Z₁ and Z₃ independently comprise methyl; Z₂ and Z₄ independently comprise hydrogen; and R₁ to R₄ are methyl.

The dicyclopentadiene copolymers of Formulas D1, D2, D3-1, D3-2, and D3-3 can be derived from Formulas P1, P2, P3-1, P3-2, and P3-3 respectively, wherein n is 1 to 100:

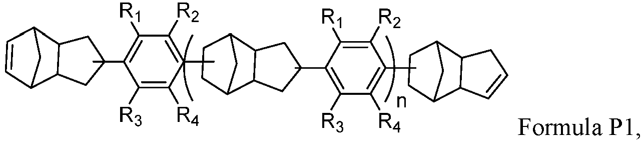

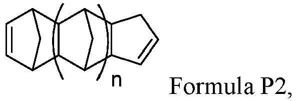

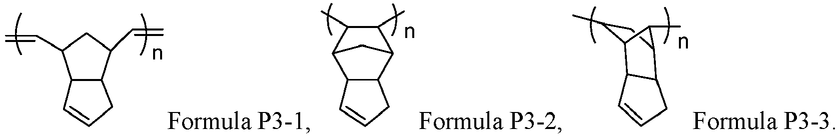

The carbon-carbon bond of the terminal dicyclopentadiene group(s) can undergo alkylation (e.g., Friedel Crafts alkylation) in the presence of an acid catalyst (e.g., Lewis Acid catalyst) with a monohydric phenol as described below.

In addition to the dicyclopentadiene copolymer component, the copolymer comprises a polyphenylene ether component. The polyphenylene ether comprises repeating units derived from a substituted or unsubstituted monohydric phenol. The substituted or unsubstituted monohydric phenol can have the structure 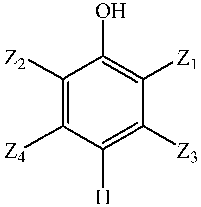
wherein Z₁ and Z₂ are each independently halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂
halohydrocarbyloxy wherein at least two carbon atoms separate the halogen and oxygen atoms;
and wherein each occurrence of Z₃ and Z₄ is independently hydrogen, halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms. In an aspect, the substituted or unsubstituted monohydric phenol comprises a 2,6-(di-C₁₋₆ alkyl) phenol. In an aspect, Z₁ and Z₂ are each methyl and Z₃ and Z₄ are each hydrogen and the monohydric phenol is 2,6-xylenol (also referred to as 2,6-dimethylphenol or "DMP").

The polyphenylene ether block therefore comprises repeating units of the formula 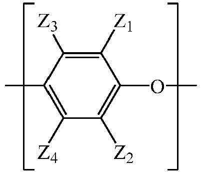 wherein Z₁ to Z₄ are as described above. In an aspect, the polyphenylene ether component comprises repeating units derived from 2,6-dimethylphenol.

The phenylene ether oligomer corresponding to the polyphenylene ether component can have a number average molecular weight of less than 5,000 grams per mole, preferably 600 to 4,500 grams per mole. Molecular weight can be determined by gel permeation chromatography (GPC) relative to polystyrene standards. The skilled person recognizes that molecular weight characterization of the phenylene ether oligomer will not be possible using GPC when the copolymer is prepared by a method that includes oxidative polymerization of the polyphenylene ether from the dicyclopentadiene copolymer component. In such cases, the number average molecular weight can be calculated from the degree of polymerization determined using nuclear magnetic resonance (NMR) spectroscopy.

The phenylene ether block oligomer corresponding to the polyphenylene ether component can have an intrinsic viscosity of less than or equal to 0.15 deciliters per gram, preferably 0.02 to 0.15 deciliters per gram, more preferably 0.12 to 0.13 deciliters per gram. Intrinsic viscosity can be determined at 25°C in chloroform by Ubbelohde viscometer. Intrinsic viscosity refers to the intrinsic viscosity of the phenylene ether oligomer prior to coupling with the dicyclopentadiene copolymer of Formulas D1, D2, D3-1, D3-2, or D3-3. As with molecular weight determination, the skilled person recognizes that intrinsic viscosity characterization of the polyphenylene ether oligomer may not be possible when the copolymer is prepared by a method that includes oxidative polymerization of the polyphenylene ether from the dicyclopentadiene copolymer component.

In an aspect, the copolymer is a block copolymer comprising at least one block A comprising a polyphenylene ether component comprising repeating units derived from 2,6-dimethylphenol and at least one block B comprising a dicyclopentadiene copolymer of Formulas D1 or D2. In an aspect, the copolymer is a graft copolymer comprising a dicyclopentadiene copolymer component of Formulas D3-1, D3-2, or D3-3. In some aspects, the copolymer is a graft copolymer and the polyphenylene ether component comprises repeating units derived from 2,6-dimethylphenol.

In an aspect, the copolymer comprises at least two blocks A comprising a polyphenylene ether component and a block B comprising a dicyclopentadiene copolymer component of Formulas D1 or D2. In an aspect, the copolymer comprises at least two blocks B comprising a comprising a dicyclopentadiene copolymer component of Formulas D1, D2 or a combination thereof; and a block B comprising a polyphenylene ether component. In some aspects, the copolymer is an A-B-A tri-block copolymer. In some aspects, the copolymer is a B-A-B tri-block copolymer.

The copolymer can include at least one terminal functional group. The at least one terminal functional group of the copolymer can include a vinyl benzene ether terminal functional group, a methacrylate terminal functional group, an acrylate terminal functional group, an epoxy terminal functional group, a cyanate ester terminal functional group, an amine terminal functional group, maleimide terminal functional group, an allyl terminal functional group, a styrenic terminal functional group, an activated ester terminal functional group, or an anhydride terminal functional group.

When the polyphenylene ether component is in a terminal position, the at least one terminal functional group can be covalently bound to polyphenylene ether component. When the dicyclopentadiene copolymer component of Formulas D1 or D2 is in a terminal position, the at least one terminal functional group can be covalently bound to the dicyclopentadiene copolymer component of Formulas D1 or D2. The graft copolymer comprising dicyclopentadiene copolymer component of D3-1, D3-2, or D3-3 can include a terminal functional group. In an aspect, at least one terminal functional group of the copolymer can comprise a methacrylate group.

In an aspect, the copolymer can be made by a method comprising oxidatively polymerizing a substituted or unsubstituted monohydric phenol from the dicyclopentadiene copolymer component of Formulas D1, D2, D3-1, D3-2, or D3-3.

The oxidative polymerization can be conducted in the presence of an organic solvent. Suitable organic solvents can include alcohols, ketones, aliphatic and aromatic hydrocarbons, chlorohydrocarbons, nitrohydrocarbons, ethers, esters, amides, mixed ether-esters, sulfoxides, and the like, provided they do not interfere with or enter into the oxidation reaction. High molecular weight poly(phenylene ethers) can greatly increase the viscosity of the reaction mixture. Therefore, it is sometimes desirable to use a solvent system that will cause them to precipitate while permitting the lower molecular weight polymers to remain in solution until they form the higher molecular weight polymers. The organic solvent can comprise, for example, toluene, benzene, chlorobenzene, ortho-dichlorobenzene, nitrobenzene, trichloroethylene, ethylene dichloride, dichloromethane, chloroform, or a combination thereof. Preferred solvents include aromatic hydrocarbons. In an aspect, the organic solvent comprises toluene, benzene, xylene, chloroform, chlorobenzene, or a combination thereof, preferably toluene.

The monohydric phenol can be present in the oxidative polymerization reaction mixture in an amount of 5 to 90 weight percent, or 10 to 85 weight percent, or 40 to 60 weight percent, based on the total weight of the monohydric phenol, the dicyclopentadiene copolymer of Formulas D1, D2, D3-1, D3-2, or D3-3, and the solvent. The dicyclopentadiene copolymer of Formulas D1, D2, D3-1, D3-2, or D3-3 can be present in the oxidative polymerization reaction mixture in an amount of 15 to 90 weight percent, based on the total weight of the monohydric phenol, dicyclopentadiene copolymer of Formulas D1, D2, D3-1, D3-2, or D3-3, and the solvent. The molar ratio of the monohydric phenol to the dicyclopentadiene copolymer of Formulas D1, D2, D3-1, D3-2, or D3-3 can be determined based on the desired molecular weight of the phenylene ether oligomer. For example, the molar ratio of the monohydric phenol to the dicyclopentadiene copolymer of Formulas D1, D2, D3-1, D3-2, or D3-3 can be 1:1 to 50:1.

The oxidative polymerization is further conducted in the presence of a copper-amine catalyst. The copper source for the copper amine catalyst can comprise a salt of cupric or cuprous ion, including halides, oxides and carbonates. Alternatively, copper can be provided in the form of a pre-formed salt of an alkylene diamine ligand. Preferred copper salts include cuprous halides, cupric halides, and their combinations. Especially preferred are cuprous bromides, cupric bromides, and combinations thereof.

A preferred copper-amine catalyst comprises a secondary alkylene diamine ligand. Suitable secondary alkylene diamine ligands are described in U.S. Pat. No. 4,028,341 to Hay and are represented by the formula

R^{b}-NH-R^{a}-NH-R^{c}

wherein R^{a} is a substituted or unsubstituted divalent residue wherein two or three aliphatic carbon atoms form the closest link between the two diamine nitrogen atoms; and R^{b} and R^{c} are each independently isopropyl or a substituted or unsubstituted C₄₋₈ tertiary alkyl group. Examples of R^{a} include ethylene, 1,2-propylene, 1,3-propylene, 1,2-butylene, 1,3-butylene, 2,3-butylene, the various pentylene isomers having from two to three carbon atoms separating the two free valances, phenylethylene, tolylethylene, 2-phenyl-1,2-propylene, cyclohexylethylene, 1,2-cyclohexylene, 1,3-cyclohexylene, 1,2-cyclopropylene, 1,2-cyclobutylene, 1,2-cyclopentylene, and the like. Preferably, R^{a} is ethylene. Examples of R^{b} and R^{c} can include isopropyl, t-butyl, 2-methyl-but-2-yl, 2-methyl-pent-2-yl, 3-methyl-pent-3-yl, 2,3-dimethyl-but-2-yl, 2,3-dimethylpent-2-yl, 2,4-dimethyl-pent-2-yl, 1-methylcyclopentyl, 1-methylcyclohexyl and the like. A highly preferred example of R^{b} and R^{c} is t-butyl. An exemplary secondary alkylene diamine ligand is N,N'-di-t-butylethylenediamine (DBEDA). Suitable molar ratios of copper to secondary alkylene diamine are from 1:1 to 1:5, preferably 1:1 to 1:3, more preferably 1:1.5 to 1:2.

The preferred copper-amine catalyst comprising a secondary alkylene diamine ligand can further comprise a secondary monoamine. Suitable secondary monoamine ligands are described in commonly assigned U.S. Pat. No. 4,092,294 to Bennett et al. and represented by the formula

R^{d}-NH-R^{e}

wherein R^{d} and R^{e} are each independently substituted or unsubstituted C₁₋₁₂ alkyl groups, and preferably substituted or unsubstituted C₃₋₆ alkyl groups. Examples of the secondary monoamine include di-n-propylamine, di-isopropylamine, di-n-butylamine, di-sec-butylamine, di-t-butylamine, N-isopropyl-t-butylamine, N-sec-butyl-t-butylamine, di-n-pentylamine, bis(1,1-dimethylpropyl)amine, and the like. A highly preferred secondary monoamine is di-n-butylamine (DBA). A suitable molar ratio of copper to secondary monoamine is from 1:1 to 1:10, preferably 1:3 to 1: 8, and more preferably 1:4 to 1:7.

The preferred copper-amine catalyst comprising a secondary alkylene diamine ligand can further comprise a tertiary monoamine. Suitable tertiary monoamine ligands are described in the abovementioned Hay U.S. Pat. No. 4,028,341 and Bennett U.S. Pat. No. 4,092,294 patents and include heterocyclic amines and certain trialkyl amines characterized by having the amine nitrogen attached to at least two groups which have a small cross-sectional area. In the case of trialkylamines, it is preferred that at least two of the alkyl groups be methyl with the third being a primary C₁₋₈ alkyl group or a secondary C₃₋₈ alkyl group. It is especially preferred that the third substituent have no more than four carbon atoms. A highly preferred tertiary amine is dimethylbutylamine (DMBA). A suitable molar ratio of copper to tertiary amine is less than 1:20, preferably less than 1:15, preferably 1:1 to less than 1:15, more preferably 1:1 to 1:12.

A suitable molar ratio of copper-amine catalyst (measured as moles of metal) to poly(phenylene ether) oligomer starting material is 1:50 to 1:400, preferably 1:100 to 1:200, more preferably 1:100 to 1:180.

The reaction conducted in the presence of a copper-amine catalyst can optionally be conducted in the presence of bromide ion. It has already been mentioned that bromide ion can be supplied as a cuprous bromide or cupric bromide salt. Bromide ion can also be supplied by addition of a 4-bromophenol, such as 2,6-dimethyl-4-bromophenol. Additional bromide ion can be supplied in the form of hydrobromic acid, an alkali metal bromide, or an alkaline earth metal bromide. Sodium bromide and hydrobromic acid are highly preferred bromide sources. A suitable ratio of bromide ion to copper ion is 2 to 20, preferably 3 to 20, more preferably 4 to 7.

In an aspect, each of the above-described components of the copper-amine catalyst are added to the oxidative polymerization reaction at the same time.

The oxidative polymerization can optionally further be conducted in the presence of one or more additional components, including a lower alkanol or glycol, a small amount of water, or a phase transfer agent. It is generally not necessary to remove reaction byproduct water during the reaction.

In an aspect, a phase transfer agent is present. Suitable phase transfer agents can include, for example, a quaternary ammonium compound, a quaternary phosphonium compound, a tertiary sulfonium compound, or a combination thereof. Preferably, the phase transfer agent can be of the formula (R³)₄Q⁺X, wherein each R₃ is the same or different, and is a C₁₋₁₀ alkyl; Q is a nitrogen or phosphorus atom; and X is a halogen atom or a C₁₋₈ alkoxy or C₆₋₁₈ aryloxy. Exemplary phase transfer catalysts include (CH₃(CH₂)₃)₄NX, (CH₃(CH₂)₃)₄PX, (CH₃(CH₂)₅)₄NX, (CH₃(CH₂)₆)₄NX, (CH₃(CH₂)₄)₄NX, CH₃(CH₃(CH₂)₃)₃NX, and CH₃(CH₃(CH₂)₂)₃NX, wherein X is Cl⁻, Br⁻, a C₁₋₈ alkoxy or a C₆₋₁₈ aryloxy. An effective amount of a phase transfer agent can be 0.1 to 10 wt%, or 0.5 to 2 wt%, each based on the weight of the reaction mixture. In an aspect, a phase transfer agent is present and comprises *N*,*N*,*N*'*N*'-didecyldimethyl ammonium chloride.

The oxidative polymerization can be conducted at a temperature of 20 to 70°C, preferably 30 to 60°C, more preferably 45 to 55°C. Depending on the precise reaction conditions chosen, the total polymerization reaction time-that is, the time elapsed between initiating oxidative polymerization and terminating oxidative polymerization-can vary, but it is typically 100 to 250 minutes, specifically 145 to 210 minutes.

The method further comprises terminating the oxidative polymerization to form a post-termination reaction mixture. The reaction is terminated when the flow of oxygen to the reaction vessel is stopped. Residual oxygen in the reaction vessel headspace is removed by flushing with an oxygen-free gas, such as nitrogen.

After the polymerization reaction is terminated, the copper ion of the polymerization catalyst is separated from the reaction mixture. This is accomplished by combining a chelant with the post-termination reaction mixture to form a chelation mixture. The chelant comprises an alkali metal salt of an aminopolycarboxylic acid, preferably an alkali metal salt of an aminoacetic acid, more preferably an alkali metal salt of nitrilotriacetic acid, ethylene diamine tetraacetic acid, or a combination thereof, even more preferably a sodium salt of nitrilotriacetic, a sodium salt of ethylene diamine tetraacetic acid, or a combination thereof. In an aspect, the chelant comprises an alkali metal salt of nitrilotriacetic acid. In an aspect, the chelant is a sodium or potassium salt of nitrilotriacetic acid, specifically trisodium nitrilotriacetate. After agitation of the chelation mixture, that mixture comprises an aqueous phase comprising chelated copper ion and an organic phase comprising the dissolved poly(phenylene ether). The chelation mixture can exclude the dihydric phenol required by U.S. Pat. No. 4,110.311 to Cooper et al., the aromatic amine required by U.S. Pat. No. 4,116,939 to Cooper et al., and the mild reducing agents of U.S. Pat. No. 4,110.311 to Cooper et al., which include sulfur dioxide, sulfurous acid, sodium bisulfite, sodium thionite, tin(II) chloride, iron (II) sulfate, chromium (II) sulfate, titanium (III) chloride, hydroxylamines and salts thereof, phosphates, glucose, and mixtures thereof. The chelation mixture is maintained at a temperature of 40 to 55°C, specifically 45 to 50°C, for 5 to 100 minutes, specifically 10 to 60 minutes, more specifically 15 to 30 minutes. This combination of temperature and time is effective for copper sequestration while also minimizing molecular weight degradation of the poly(phenylene ether). The chelation step includes (and concludes with) separating the aqueous phase and the organic phase of the chelation mixture. This separation step is conducted at a temperature of 40 to 55°C, specifically 45 to 50°C. The time interval of 5 to 100 minutes for maintaining the chelation mixture at 40-55°C is measured from the time at which the post-termination reaction mixture is first combined with chelant to the time at which separation of the aqueous and organic phases is complete.

In an aspect, the copolymer can be made by a method comprising covalently coupling a dicyclopentadiene precursor of Formulas P1, P2, P3-1, P3-2, or P3-3 and a phenylene ether oligomer, wherein the dicyclopentadiene precursor of Formulas P1, P2, P3-1, P3-2, or P3-3 and the phenylene ether oligomer comprise complementary reactive groups. For example, a dicyclopentadiene precursor of Formulas P1, P2, P3-1, P3-2, or P3-3 comprises at least one reactive group (e.g., a carbon-carbon double bond). In the presence of a catalyst (e.g., acid catalyst such as a Lewis acid catalyst), the carbon-carbon double bond of the dicyclopentadiene precursor of Formulas P1, P2, P3-1, P3-2, or P3-3 can react with a polyphenylene oligomer to provide the copolymer. In some aspects, one carbon-carbon double bond of the dicyclopentadiene precursor of Formulas P1 or P2 can react with a polyphenylene oligomer to provide a di-block copolymer. In some aspects, both terminal carbon-carbon double bonds of the dicyclopentadiene precursor of Formulas P1 or P2 can react with a polyphenylene oligomer to provide a tri-block copolymer. In some aspects, one carbon-carbon double bond of the dicyclopentadiene precursor of Formulas P3-1, P3-2, or P3-3 can react with a polyphenylene oligomer to provide a graft copolymer.

The copolymer can be isolated, for example, by precipitation into a suitable nonsolvent for the copolymer, for example, into methanol.

The method of making the copolymer can further comprise reacting the copolymer having at least one A block occupying a terminal position of the copolymer (e.g., a hydroxyl-terminated phenylene ether oligomer) with a compound selected to provide a desired functional group at a chain end of the copolymer, for example a methacrylate group. Suitable compounds comprising the desired functional group and a group reactive toward the hydroxyl-terminated phenylene ether oligomer can be readily determined by one skilled in the art. The reaction can be conducted in a solvent. In an aspect, the copolymer can be obtained as a powder that is subsequently combined with the compound comprising the desired functional group and a solvent. In an aspect, the copolymer can be obtained as a solution from the polymerization or coupling reaction without removing the solvent, and the copolymer is not isolated prior to conducting the reaction. An exemplary synthesis is further described in the examples below.

Various methods for the manufacture of the copolymer are further described in the examples below.

Also provided is a curable thermosetting composition including the copolymer. For example, the copolymer can be present in the curable thermosetting composition in an amount of 1 to 95 weight percent (wt%), or 5 to 95 wt%, or 10 to 85 wt%, or 20 to 80 wt%, 30 to 70 wt%, or 5 to 30 wt%, or 5 to 15 wt%, based on the total weight of the curable thermosetting composition.

The curable thermosetting composition can further include one or more of a crosslinking agent, a curing agent, a curing catalyst, a curing initiator, or a combination thereof. In an aspect, the curable thermosetting composition can further include one or more of a flame retardant, a filler, a coupling agent, or a combination thereof. For example, the curable thermosetting composition can include one or more of a crosslinking agent, a curing agent, a curing catalyst, a curing initiator, or a combination thereof; and can further include one or more of a flame retardant, a filler, a coupling agent, or a combination thereof.

There is considerable overlap among thermosetting resins, crosslinking agents, and coupling agents. As used herein, the term "crosslinking agent" includes compounds that can be used as thermosetting resins, crosslinkers, coupling agents, or a combination thereof. For example, in some instances a compound that is a thermosetting resin could also be used as a crosslinking agent, a coupling agent, or both.

The thermosetting resins are not particularly limited, and thermosetting resins can be used alone or in combinations of two or more thermosetting resins (e.g., including one or more auxiliary thermosetting resins). Exemplary thermosetting resins include epoxy resins, cyanate ester resins, (bis)maleimide resins, (poly)benzoxazine resins, vinyl resins (e.g., a vinyl benzyl ether resin), phenolic resins, alkyd resins, unsaturated polyester resins, arylcyclobutene resins, perfluorovinyl ether resins, monomers, oligomers or polymers with curable unsaturation (e.g., a vinyl functionality), or the like, or a combination thereof.

The epoxy resin can generally be any epoxy resin that is suitable for use in thermosetting resins. The term "epoxy resin" in this context refers to a curable composition of oxirane ring-containing compounds as described in, for example, C. A. May, Epoxy Resins, 2.sup.nd Edition, (New York & Basle: Marcel Dekker Inc.), 1988. The epoxy resins can include bisphenol A type epoxy resins such as those obtained from bisphenol A and resins obtained by substituting at least one position of the 2-position, the 3-position and the 5-position of bisphenol A with a halogen atom, an alkyl group having 6 or less carbon atoms or a phenyl group; bisphenol F type epoxy resins such as those obtained from bisphenol F and a resin obtained by substituting at least one position of the 2-position, the 3-position and the 5-position of bisphenol F with a halogen atom, an alkyl group having 6 or less carbon atoms or a phenyl group; glycidyl ether compounds derived from bivalent or tri- or more-valent phenols such as hydroquinone, resorcinol, tris-4-(hydroxyphenyl)methane and 1,1,2,2-tetrakis(4-hydroxyphenyl)ethane; a novolak type epoxy resin derived from a novolak resin which is a reaction product between phenols such as phenol and o-cresol and formaldehyde, including bisphenol A novolak type epoxy resins and cresol novolak type epoxy resins; cyclic aliphatic epoxy compounds such as 2,2-bis(3,4-epoxycyclohexyl)propane, 2,2-bis[4-(2,3-epoxypropyl)cyclohexyl]propane, vinylcyclohexene dioxide, 3,4-epoxycyclohexylmethyl-3,4-epoxycyclohexane carboxylate; dicyclopentadiene-containing polyepoxides; amine type epoxy resins derived from aniline, p-aminophenol, m-aminophenol, 4-amino-m-cresol, 6-amino-m-cresol, 4,4'-diaminodiphenyl-ethane, 3,3'-diaminodiphenylmethane, 4,4'-diaminodiphenyl ether, 3,4'-diaminodiphenylether, 1,4-bis(4-aminophenoxy)benzene, 1,4-bis(3-aminophenoxy)-benzene, 1,3-bis(4-aminophenoxy)-benzene, 1,3-bis(3-aminophenoxy)benzene, 2,2-bis(4-amino-phenoxyphenyl)propane, p-phenylenediamine, m-phenylenediamine, 2,4-toluenediamine, 2,6-toluenediamine, p-xylylenediamine, m-xylylenediamine, 1,4-cyclohexane-bis(methylamine), 5-amino-1-(4'-aminophenyl)-1,3,3-trimethylindane, 6-amino-1-(4'-aminophenyl)-1,3,3-trimethyl-indane or the like; heterocyclic epoxy compounds, and glycidyl ester type epoxy compounds, for example, those derived from glycidyl ester of aromatic carboxylic acids such as p-oxybenzoic acid, m-oxybenzoic acid, terephthalic acid, and isophthalic acid. An "epoxy resin" can also include reaction products of compounds containing two or more epoxy groups and aromatic dihydroxy compounds, which can be optionally halogen-substituted and can be used alone or in a combination of two or more.

Cyanate esters are not limited, and any resin composed of cyanate ester monomers, which polymerize to form a polymer containing a plurality of cyanate ester (-OCN) functional groups can be used. Cyanate ester monomers, prepolymers (i.e., partially polymerized cyanate ester monomers or blends of cyanate ester monomers), homopolymers, and copolymers made using cyanate ester precursors, and combinations of these compounds. For example, cyanate esters can be prepared according to methods as disclosed in "Chemistry and Technology of Cyanate Ester Resins", by Ian Hamerton, Blackie Academic and Professional; U.S. Pat. No. 3,553,244, and JP-A-7-53497. Exemplary cyanate ester resins include 2,2-bis(4-cyanatophenyl)-propane, bis(4-cyanatophenyl)ethane, bis(3,5-dimethyl-4-cyanatophenyl)methane, 2,2-bis(4-cyanatophenyl)-1,1,1,3,3,3-hexafluoropropane, α,α'-bis(4-cyanatophenyl)-m-diisopropylbenzene, cyanate ester resins prepared from dicyclopentadiene-phenol copolymers, and prepolymers prepared from these monomers. An example of a prepolymer is PRIMASET BA-230S (Lonza). The cyanate ester prepolymers can be homopolymers or can be copolymers that incorporate other monomers. Examples of such copolymers include BT resins available from Mitsubishi Gas Chemical, such as, BT 2160 and BT2170, which are prepolymers made with cyanate ester monomers and bismaleimide monomers. Other cyanate esters polymers, monomers, prepolymers, and blends of cyanate ester monomers with other non-cyanate ester monomers are disclosed in US 7393904, US 7388057, US 7276563, and US 7192651.

Bismaleimide resins can be produced by reaction of a monomeric bismaleimide with a nucleophile such as a diamine, aminophenol, or amino benzhydrazide, or by reaction of a bismaleimide with diallyl bisphenol A. Exemplary bismaleimide resins include 1,2-bismaleimidoethane, 1,6-bismaleimidohexane, 1,3-bismaleimidobenzene, 1,4-bismaleimidobenzene, 2,4-bismaleimidotoluene, 4,4'-bismaleimidodiphenylmethane, 4,4'-bismaleimido-diphenylether, 3,3'-bismaleimidodiphenylsulfone, 4,4'-bismaleimido-diphenylsulfone, 4,4'-bismaleimidodicyclohexylmethane, 3,5-bis(4-maleimidophenyl)pyridine, 2,6-bismaleimido-pyridine, 1,3-bis(maleimidomethyl)cyclohexane, 1,3-bis(maleimidomethyl)benzene, 1,1-bis(4-maleimidophenyl)cyclohexane, 1,3-bis(dichloromaleimido)benzene, 4,4'-bis(citracon-imido)diphenylmethane, 2,2-bis(4-maleimidophenyl)propane, 1-phenyl-1,1-bis(4-maleimidophenyl)ethane, N,N-bis(4-maleimidophenyl)toluene, 3,5-bismaleimido-1,2,4-triazole N,N'-ethylenebismaleimide, N,N'-hexamethylenebismaleimide, N,N'-m-phenylene-bismaleimide, N,N'-p-phenylenebismaleimide, N,N'-4,4'-diphenylmethanebismaleimide, N,N'-4,4'-diphenyl-etherbismaleimide, N,N'-4,4'-diphenylsufonebismaleimide, N,N'-4,4'-dicyclohexylmethanebismaleimide, N,N'-α,α'-4,4'-dimethylenecyclohexanebismaleimide, N,N'-m-methaxylene-bismaleimide, N,N'-4,4'-diphenylcyclohexanebismaleimide, and N,N'-methylene-bis(3-chloro-p-phenylene)bismaleimide, as well as those disclosed in US 3,562,223; US 4,211,860; and US 4,211,861, or as prepared by methods as described, for example, in US 3,018,290.

The benzoxazine compounds have a benzoxazine ring in the molecule. Exemplary benzoxazine monomers can be prepared from the reaction of aldehydes, phenols, and primary amines with or without solvent. The phenolic compounds for forming benzoxazines include phenols and polyphenols. The use of polyphenols with two or more hydroxyl groups reactive in forming benzoxazines can result in branched, crosslinked, or a combination of branched and crosslinked products. The groups connecting the phenolic groups into a phenol can be branch points or connecting groups in the polybenzoxazine.

Exemplary phenols for use in the preparation of benzoxazine monomers include phenol, cresol, resorcinol, catechol, hydroquinone, 2-allylphenol, 3-allylphenol, 4-allylphenol, 2,6-dihydroxynaphthalene, 2,7-dihydrooxynapthalene, 2-(diphenyl-phosphoryl)hydroquinone, 2,2'-biphenol, 4,4-biphenol, 4,4'-isopropylidenediphenol, 4,4'-isopropylidenebis(2-methylphenol), 4,4'-isopropylidenebis(2-allylphenol), 4,4'(1,3-phenylenediisopropylidene)bisphenol (bisphenol M), 4,4'-isopropylidenebis(3-phenylphenol) 4,4'-(1,4-phenylenediisoproylidene)-bisphenol, 4,4'-ethylidenediphenol, 4,4'-oxydiphenol, 4,4'-thiodiphenol, 4,4'-sufonyldiphenol, 4,4'-sulfinyldiphenol, 4,4'-hexafluoroisopropylidene)bisphenol, 4,4'(1-phenylethylidene)-bisphenol, bis(4-hydroxyphenyl)-2,2-dichloroethylene, bis(4-hydroxyphenyl)methane, 4,4'-(cyclopentylidene)diphenol, 4,4'-(cyclohexylidene)diphenol, 4,4'-(cyclododecylidene)diphenol 4,4'-(bicyclo[2.2.1]heptylidene)diphenol, 4,4'-(9H-fluorene-9,9-diyl)diphenol, isopropylidene-bis(2-allylphenol), 3,3-bis(4-hydroxyphenyl)isobenzofuran-1(3H)-one, 1-(4-hydroxyphenyl)-3,3-dimethyl-2,3-dihydro-1H-inden-5-ol, 3,3,3',3'-tetramethyl-2,2',3,3'-tetrahydro-1,1'-spirobi-[indene] 5,6'-diol, dihydroxybenzophenone, tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tetrakis(4-hydroxyphenyl)ethane dicyclopentadienylbis(2,6-dimethyl phenol), dicyclopentadienyl bis(ortho-cresol), dicyclopentadienyl bisphenol, or the like.

The aldehydes used to form the benzoxazine can be any aldehyde, such as an aldehyde having 1 to 10 carbon atoms. For example, the aldehyde can be formaldehyde. The amine used to form the benzoxazine can be an aromatic amine, an aliphatic amine, an alkyl substituted aromatic, or an aromatic substituted alkyl amine. The amine can be a polyamine, for example to prepare polyfunctional benzoxazine monomers for crosslinking.

The amines for forming benzoxazines have 1 to 40 carbon atoms unless they include aromatic rings, and then they can have 6 to 40 carbon atoms. The amine of di- or polyfunctional can be a branch point to connect one polybenzoxazine to another.

In some examples, thermal polymerization at 150 to 300° C can be used for polymerizing benzoxazine monomers. The polymerization can be done in bulk, from solution, or otherwise. Catalysts, such as carboxylic acids, can be used to reduce the polymerization temperature or accelerate the polymerization rate at the same temperature.

Vinyl benzyl ether resins can be prepared from condensation of a phenol with a vinyl benzyl halide, such as vinyl benzyl chloride. Bisphenol-A and trisphenols and polyphenols are generally used to produce poly(vinylbenzyl ethers) which can be used to produce crosslinked thermosetting resins. Exemplary vinyl benzyl ethers can include those vinylbenzyl ethers produced from reaction of a vinylbenzyl halide with resorcinol, catechol, hydroquinone, 2,6-dihydroxynaphthalene, 2,7-dihydroxynaphthalene, 2-(diphenyl-phosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol, 4,4'-isopropylidenebis(2,6-dibromophenol), 4,4'-isopropylidenebis(2,6-dimethylphenol) (teramethylbisphenol A), 4,4'-isopropylidenebis(2-methylphenol), 4,4'-ispropylidenebis(2-allylphenol), 4,4'(1,3-phenylenediisopropylidene)bisphenol, 4,4'-isopropyli-denebis(3-phenylphenol) 4,4'-(1,4-phenylenediisoproylidene)bisphenol, 4,4'-ethylidenediphenol, 4,4'-oxydiphenol, 4,4'-thiodiphenol, 4,4'-thiobis(2,6-dimethylphenol), 4,4'-sufonyldiphenol, 4,4'-sulfonylbis(2,6-dimethylphenol) 4,4'-sulfinyl-diphenol, 4,4'-hexafluoroisopropylidene)bisphenol, 4,4'(1-phenylethylidene) bisphenol, bis(4-hydroxyphenyl)-2,2-dichloroethylene, bis(4-hydroxy-phenyl)methane, bis(2,6-dimethyl-4-hydroxyphenyl)methane, 4,4'-(cyclopentylidene)diphenol, 4,4'-(cyclohexylidene)diphenol, 4,4'-(cyclododecylidene)diphenol 4,4'-(bicyclo [2.2.1]heptylidene)diphenol, 4,4'-(9H-fluorene-9,9-diyl)diphenol, 3,3-bis(4-hydroxyphenyl)-isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol, dihydroxybenzophenone, tris(4-hydroxyphenyl)methane, tris(4-hydroxyphenyl)ethane, tris(4-hydroxyphenyl)-propane, tris(4-hydroxyphenyl)butane, tris(3-methyl-4-hydroxyphenyl)methane, tris(3,5-dimethyl-4-hydroxy-phenyl)methane, tetrakis(4-hydroxyphenyl)ethane, tetrakis(3,5-dimethyl-4-hydroxyphenyl)-ethane, bis(4-hydroxyphenyl)phenylphosphine oxide, dicyclopentadienyl-bis(2,6-dimethyl phenol), dicyclopentadienyl bisphenol, or the like.

Arylcyclobutenes include those derived from compounds of the structure 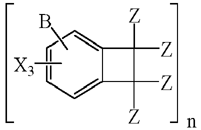 wherein B is an organic or inorganic radical of valence n (including carbonyl, sulfonyl, sulfinyl, sulfide, oxy, alkylphosphonyl, arylphosphonyl, isoalkylidene, cycloalkylidene, arylalkylidene, diarylmethylidene, methylidene dialkylsilanyl, arylalkylsilanyl, diarylsilanyl and C₆₋₂₀ phenolic compounds); each occurrence of X is independently hydroxy or C₁₋₂₄ hydrocarbyl (including linear and branched alkyl and cycloalkyl); and each occurrence of Z is independently hydrogen, halogen, or C₁₋₁₂ hydrocarbyl; and n is 1 to 1000 ,or 1 to 8, or n is 2, 3, or 4. Other exemplary arylcyclobutenes and methods of arylcyclobutene synthesis can be found in US 4,743,399, US 4,540,763, US 4,642,329, US 4,661,193, US 4,724,260, and 5391,650.

Perfluorovinyl ethers are typically synthesized from phenols and bromotetrafluoroethane followed by zinc catalyzed reductive elimination producing ZnFBr and the desired perfluorovinylether. By this route bis, tris, and other polyphenols can produce bis-, tris- and poly(perfluorovinylether)s. Phenols useful in their synthesis include resorcinol, catechol, hydroquinone, 2,6-dihydroxy naphthalene, 2,7-dihydroxynapthalene, 2-(diphenylphosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol (bisphenol A), 4,4'-isopropylidenebis(2,6-dibromophenol), 4,4'-isopropylidenebis(2,6-dimethylphenol), 4,4'-isopropylidenebis(2-methylphenol), 4,4'-isopropylidenebis(2-allylphenol), 4,4'(1,3-phenylenediisopropylidene)-bisphenol, 4,4'-isopropylidenebis(3-phenylphenol) 4,4'-(1,4-phenylenediisoproylidene)-bisphenol, 4,4'-ethylidenediphenol, 4,4'oxydiphenol, 4,4'thiodiphenol, 4,4'thiobis(2,6-dimethylphenol), 4,4'-sufonyldiphenol, 4,4'-sulfonylbis(2,6-dimethylphenol) 4,4'-sulfinyldiphenol, 4,4'-hexafluoroisoproylidene)bisphenol, 4,4'(1-phenylethylidene)-bisphenol, bis(4-hydroxyphenyl)-2,2-dichloroethylene, bis(4-hydroxyphenyl)-methane, bis(2,6-dimethyl-4-hydroxyphenyl)methane, 4,4'-(cyclopentylidene)diphenol, 4,4'-(cyclohexylidene)diphenol, 4,4'-(cyclododecylidene)diphenol 4,4'-(bicyclo[2.2.1]heptylidene)-diphenol, 4,4'-(9H-fluorene-9,9-diyl)diphenol, 3,3-bis(4-hydroxyphenyl)isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol (Spirobiindane), dihydroxybenzophenone, tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tris(3,5-dimethyl-4-hydroxyphenyl)methane, tetrakis(4-hydroxyphenyl)ethane, tetrakis(3,5-dimethyl-4-hydroxyphenyl)ethane, bis(4-hydroxyphenyl)-phenylphosphine oxide, dicyclopentadienylbis(2,6-dimethyl phenol), dicyclopentadienyl bis(2-methylphenol), dicyclopentadienyl bisphenol, or the like.

The crosslinking agents, which also include auxiliary crosslinking agents, are not particularly limited. The crosslinking agents can be used alone or in combinations of two or more different crosslinking agents. Exemplary crosslinking agents and auxiliary crosslinking agents include oligomers or polymers with curable vinyl functionality. Such materials include oligomers and polymers having crosslinkable unsaturation. Examples include styrene butadiene rubber (SBR), butadiene rubber (BR), and nitrile butadiene rubber (NBR) having unsaturated bonding based on butadiene; natural rubber (NR), isoprene rubber (IR), chloroprene rubber (CR), butyl rubber (IIR), and halogenated butyl rubber having unsaturated bonding based on isoprene; ethylene-α-olefin copolymer elastomers having unsaturated bonding based on dicyclopentadiene (DCPD), ethylidene norbornene (ENB), or 1,4-dihexadiene (1,4-HD) (e.g., ethylene-α-olefin copolymers obtained by copolymerizing ethylene, an α-olefin, and a diene, such as ethylene-propylene-diene terpolymer (EPDM) and ethylene-butene-diene terpolymer (EBDM)). Examples also include hydrogenated nitrile rubber, fluorocarbon rubbers such as vinylidenefluoride-hexafluoropropene copolymer and vinylidenefluoride-pentafluoropropene copolymer, epichlorohydrin homopolymer (CO), copolymer rubber (ECO) prepared from epichlorohydrin and ethylene oxide, epichlorohydrin allyl glycidyl copolymer, propylene oxide allyl glycidyl ether copolymer, propylene oxide epichlorohydrin allyl glycidyl ether terpolymer, acrylic rubber (ACM), urethane rubber (U), silicone rubber (Q), chlorosulfonated polyethylene rubber (CSM), polysulfide rubber (T) and ethylene acrylic rubber. Further examples include various liquid rubbers, for example several types of liquid butadiene rubbers, and the liquid atactic butadiene rubber that is butadiene polymer with 1,2-vinyl connection prepared by anionic living polymerization. It is also possible to use liquid styrene butadiene rubber, liquid nitrile butadiene rubber (CTBN, VTBN, ATBN, etc. by Ube Industries, Ltd.), liquid chloroprene rubber, liquid polyisoprene, dicyclopentadiene type hydrocarbon polymer, and polynorbornene (for example, as sold by Elf Atochem).

Polybutadiene resins containing elevated levels of 1,2 addition are desirable for thermosetting matrices. Examples include the functionalized polybutadienes and poly(butadienestyrene) random copolymers sold by Ricon Resins, Inc. under the trade names RICON, RICACRYL, and RICOBOND resins. These include butadienes containing both low vinyl content such as RICON 130, 131, 134, 142; polybutadienes containing high vinyl content such as RICON 150, 152, 153, 154, 156, 157, and P30D; random copolymers of styrene and butadiene including RICON 100, 181, 184, and maleic anhydride grafted polybutadienes and the alcohol condensates derived therefrom such as RICON 130MA8, RICON MA13, RICON 130MA20, RICON 131MAS, RICON 131MA10, RICON MA17, RICON MA20, RICON 184MA6 and RICON 156MA17. Also included are polybutadienes that can be used to improve adhesion including RICOBOND 1031, RICOBOND 1731, RICOBOND 2031, RICACRYL 3500, RICOBOND 1756, RICACRYL 3500; the polybutadienes RICON 104 (25% polybutadiene in heptane), RICON 257 (35% polybutadiene in styrene), and RICON 257 (35% polybutadiene in styrene); (meth)acrylic functionalized polybutadienes such as polybutadiene diacrylates and polybutadiene dimethacrylates. These materials are sold under the tradenames RICACRYL 3100, RICACRYL 3500, and RICACRYL 3801. Also are included are powder dispersions of functional polybutadiene derivatives including, for example, RICON 150D, 152D, 153D, 154D, P30D, RICOBOND 0 1731 HS, and RICOBOND 1756HS. Further butadiene resins include poly(butadiene-isoprene) block and random copolymers, such as those with molecular weights from 3,000 to 50,000 g/mol and polybutadiene homopolymers having molecular weights from 3,000 to 50,000 g/mol. Also included are polybutadiene, polyisoprene, and polybutadiene-isoprene copolymers functionalized with maleic anhydride functions, 2-hydroxyethylmaleic functions, or hydroxylated functionality.

Further examples of oligomers and polymers with curable vinyl functionality include unsaturated polyester resins based on maleic anhydride, fumaric acid, itaconic acid and citraconic acid; unsaturated epoxy (meth)acrylate resins containing acryloyl groups, or methacryloyl group; unsaturated epoxy resins containing vinyl or allyl groups, urethane (meth)acrylate resin, polyether (meth)acrylate resin, polyalcohol (meth)acrylate resins, alkyd acrylate resin, polyester acrylate resin, spiroacetal acrylate resin, diallyl phthalate resin, diallyl tetrabromophthalate resin, diethyleneglycol bisallylcarbonate resin, and polyethylene polythiol resins. For example, the crosslinking agent. Other exemplary crosslinking agents further include polyfunctional crosslinking monomers such as (meth)acrylate monomers having two or more (meth)acrylate moieties per monomer molecule. Exemplary polyfunctional monomers include di(meth)acrylates such as 1,6-hexanediol di(meth)acrylate, 1,4-cyclohexanediol di(meth)acrylate, tripropylene glycol di(meth)acrylate, neopentyl glycol di(meth)acrylate, neopentyl glycol propoxylate di(meth)acrylate, neopentyl glycol ethoxylate di(meth)acrylate, neopentyl glycol propoxylate di(meth)acrylate, neopentyl glycol ethoxylate di(meth)acrylate, polyethylene glycol di(meth)acrylate, glycerol di(meth)acrylate, or the like; tri(meth)acrylates such as trimethylolpropane tri(meth)acrylate, 1,2,4- butanetriol tri(meth)acrylate, trimethylolpropane ethoxylate tri(meth)acrylate, or the like; tri(meth)allyls such as tri(meth)allyl cyanurate, tri(meth)allyl isocyanurate, tri(meth)allyl esters of citric acid, tri(meth)allyl esters of phosphoric acid, pentaerythritol tri(meth)acrylate, tris(hydroxyethyl)isocyanurate tri(meth)acrylate, or the like; tetra(meth)acrylates such as pentaerythritol tetra(meth)acrylate or the like; penta(meth)acrylates such as dipentaerythritol penta(meth)acrylate, or the like; hexa(meth)acrylates such as dipentaerythritol hexa(meth)acrylate, sorbitol hexa(meth)acrylate, or the like; glycidyl compounds such as glycidyl (meth)acrylate, (meth)allyl glycidyl ether, 1-chloro-2,3-epoxypropyl (meth)acrylate, 2-bromo-3,4-epoxybutyl (meth)acrylate, 2-(epoxyethyloxy)-ethyl (meth)acrylate, 2-(3,4-epoxybutyloxy)-ethyl (meth)acrylate, or the like; polythiol compounds such as trimethylolpropane tris(mercaptopropionate), pentaerythritol tetrakis(3-mercaptopropionate), or the like; silanes such as tetramethoxysilane, tetraethoxysilane, tetrapropoxysilane, tetra-n-butoxysilane, vinyltris(methylethyloximino)silane, vinyltris-(acetoxime)silane, methyltris(methylethyloximino)silane, methyltris(acetoxime)silane, vinyltrimethoxysilane, methyltrimethoxysilane, vinyltris(isopropenoxy)silane, tetraacetoxy-silane, methyltriacetoxysilane, ethyltriacetoxysilane, vinyltriacetoxysilane, di-t-butoxy-diacetoxysilane, methyltris(ethyl lactate)silane, vinyltris(ethyl lactate)silane, or the like; carbodiimides such as N-(3-dimethylaminopropyl)-N'-ethylcarbodiimide hydrochloride, dicyclohexylcarbodiimide, or the like; or a combination thereof. The curable thermosetting composition can optionally include a crosslinking catalyst, such as a carboxylic acid salt.

When the curable thermosetting composition includes a crosslinking agent, the crosslinking agent can be included in an amount of 1 to 60 wt%, or 5 to 45 wt%, or 10 to 30 wt%, based on total weight of the curable thermosetting composition.

The curable thermosetting composition can include one or more curing agents. As used herein, the term "curing agent" includes compounds that are variously described as curing agents, hardeners, or the like, or as both.

Exemplary curing agents and hardeners include amines, alcohols, phenols, carboxylic acids, acid anhydrides, and the like. For example, phenolic hardeners include novolac type phenol resins, resole type phenol resins, cresol novolac resins, aralkyl type phenol resins, phenol aralkyl resins, cresol aralkyl resins, naphthol aralkyl resins, dicyclopentadiene type phenol resins, terpene modified phenol resins, biphenyl type phenol resins, biphenyl-modified phenol aralkyl resins, bisphenols, triphenylmethane type phenol resins, tetraphenylol ethane resins, naphthol novolac resins, naphthol-phenol co-condensed novolac resins, naphthol-cresol co-condensed novolac resins, amino triazine modified phenol resins, or a combination thereof. Examples of the anhydride hardeners include methylhexahydrophthalic anhydride (MHHPA), methyltetrahydrophthalic anhydride, styrene-maleic anhydride copolymers (SMA), and olefin-maleic anhydride copolymers such as maleic anhydride grafted polyethylene, maleic anhydride grafted polypropylene, or a combination thereof. Other curing agents and hardeners include compounds such as dicyandiamides, polyamides, amidoamines, phenalkamines, Mannich bases, anhydrides, phenol-formaldehyde resins, amine-formaldehyde resins, phenol-formaldehyde resins, carboxylic acid functional polyesters, polysulfides, polymercaptans, isocyanates, cyanate ester compounds, or any combination thereof. Other exemplary curing agents include tertiary amines, Lewis acids, and oligomers or polymers with unsaturation.

When the curable thermosetting composition includes a curing agent, the curing agent can be included in an amount of 0.01 to 50 wt%, or 0.1 to 30 wt%, or 0.1 to 20 wt%, based on total weight of the curable thermosetting composition.

The curable thermosetting composition can include a curing catalyst. As used herein, the term "curing catalyst" includes compounds that are variously described as curing accelerators, curing promoters, curing catalysts, and curing co-catalysts.

Exemplary curing accelerators include heterocyclic accelerators such as a substituted or unsubstituted C₃₋₆ heterocycle comprising 1 to 4 ring heteroatoms, wherein each heteroatom is independently the same or different, and is nitrogen, oxygen, phosphorus, silicon, or sulfur. Heterocyclic accelerators include benzotriazoles; triazines; piperazines such as aminoethylpiperazine, N-(3-aminopropyl)piperazine, or the like; imidazoles such as 1-methylimidazole, 2-methylimidazole, 3-methyl imidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole; cyclic amidine such as 4-diazabicyclo(2,2,2)octane, diazabicycloundecene, 2-phenyl imidazoline, or the like; N,N-dimethylaminopyridine; a sulfamidate; or a combination thereof.

Amine curing accelerators include isophoronediamine, triethylenetetraamine, diethylenetriamine, 1,2- and 1,3-diaminopropane, 2,2-dimethylpropylenediamine, 1,4-diaminobutane, 1,6-diaminohexane, 1,7-diaminoheptane, 1,8-diaminooctane, 1,9-diaminononane, 1,12-diaminododecane, 4-azaheptamethylenediamine, N,N'-bis(3-aminopropyl)butane-1,4-diamine, dicyanamide, diamide diphenylmethane, diamide diphenylsulfonic acid (amine adduct), 4,4'-methylenedianiline, diethyltoluenediamine, m-phenylenediamine, p-phenylenediamine, melamine formaldehyde resins, urea formaldehyde resins, tetraethylenepentamine, 3-diethylaminopropylamine, 3,3'-iminobispropylamine, 2,4-bis(p-aminobenzyl)aniline, tetraethylenepentamine, 3-diethylaminopropylamine, 2,2,4- and 2,4,4-trimethylhexamethylenediamine, 1,2- and 1,3-diaminocyclohexane, 1,4-diamino-3,6-diethylcyclohexane, 1,2-diamino-4-ethylcyclohexane, 1,4-diamino-3,6-diethylcyclohexane, 1-cyclohexyl-3,4-diminocyclohexane, 4,4'-diaminondicyclohexylmethane, 4,4'-diaminodicyclohexylpropane, 2,2-bis(4-aminocyclohexyl)propane, 3,3'-dimethyl-4,4'-diaminodicyclohexylmethane, 3-amino-1-cyclohexaneaminopropane, 1,3- and 1,4-bis(aminomethyl)cyclohexane, m- and p-xylylenediamine, or diethyl toluene diamines; or a tertiary amine hardening accelerator such as triethylamine, tributylamine, dimethylaniline, diethylaniline, benzyldimethylamine (BDMA), α-methylbenzyldimethylamine, N,N-dimethyl amino pyridine, *N*,*N*-dimethylaminoethanol, *N*,*N-*dimethylaminocresol, or tri(*N,N-*dimethylaminomethyl)phenol; or a combination thereof.

The curing accelerator can be a latent cationic cure catalyst including, for example, diaryliodonium salts, phosphonic acid esters, sulfonic acid esters, carboxylic acid esters, phosphonic ylides, triarylsulfonium salts, benzylsulfonium salts, aryldiazonium salts, benzylpyridinium salts, benzylammonium salts, isoxazolium salts, or the like, or a combination thereof. The diaryliodonium salt can have the structure [(R¹⁰)(R¹¹)I]⁺ X⁻, wherein R¹⁰ and R¹¹ are each independently a C₆₋₁₄ monovalent aromatic hydrocarbon radical, optionally substituted with from 1 to 4 monovalent radicals selected from C₁₋₂₀ alkyl, C₁₋₂₀ alkoxy, nitro, and chloro; and wherein X- is an anion. The additional cure accelerator can have the structure [(R¹⁰)(R¹¹)I]⁺ SbF₆⁻, wherein R¹⁰ and R¹¹ are each independently a C₆₋₁₄ monovalent aromatic hydrocarbon, optionally substituted with from 1 to 4 C₁₋₂₀ alkyl, C₁₋₂₀ alkoxy, nitro, or chloro; for example, 4-octyloxyphenyl phenyl iodonium hexafluoroantimonate.

The curing accelerator can be a metal salt complex, such as a copper (II) aluminum (III), zinc, cobalt, tin salt of an aliphatic or aromatic carboxylic acid selected from copper (II), tin (II), and aluminum (III) salts of acetate, stearate, gluconate, citrate, benzoate, and mixtures thereof. For example, the cure accelerator can be a copper (II) or aluminum (III) salts of β-diketonates; copper (II), iron (II), iron (III), cobalt (II), cobalt (III), or aluminum (III) salts of acetylacetonates; zinc (II), chromium (II), or manganese (II) salts of octoates; or a combination thereof.

When the curable thermosetting composition includes a curing catalyst, the curing catalyst can be included in an amount of 0.01 to 5 wt%, or 0.05 to 5 wt%, or 0.1 to 5 wt%, based on total weight of the curable thermosetting composition.

The curable thermosetting composition can optionally include a curing initiator, such as a peroxide compound. Exemplary peroxide curing initiators can include benzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, t-butylperoxybenzoate, t-butylperoxy 2-ethylhexyl carbonate, 2,4-dichlorobenzoyl peroxide, 2,5-dimethylhexane-2,5-dihydroperoxide, butyl-4,4-bis(tert-butyldioxy)valerate, 2,5-dimethyl-2,5-di(t-butylperoxy)-hex-3-yne, di-t-butylperoxide, t-butylcumyl peroxide, α,α'-bis(t-butylperoxy-m-isopropyl)benzene, 2,5-dimethyl-2,5-di(t-butylperoxy)hexane, dicumylperoxide, di(t-butylperoxy isophthalate, t-butylperoxybenzoate, 2,2-bis(t-butylperoxy)butane, 2,2-bis(t-butylperoxy)octane, 2,5-dimethyl-2,5-di(benzoylperoxy)hexane, 1,1-di-(tert-butylperoxy)-3,3,5-trimethylcyclohexane, di(trimethylsilyl)peroxide, trimethylsilylphenyltriphenylsilyl peroxide, or the like, or a combination thereof.

When the curable thermosetting composition includes a curing initiator, the curing initiator can be included in an amount of 0.1 to 5 wt%, or 0.5 to 5 wt%, or 1 to 5 wt%, based on total weight of the curable thermosetting composition.

Flame retardants include, for example, organic compounds that comprise phosphorus, bromine, or chlorine. Non-brominated and non-chlorinated phosphorus-containing flame retardants can be preferred in certain applications for regulatory reasons, for example organic phosphates and organic compounds containing phosphorus-nitrogen bonds.

Examples of phosphorous flame retardants include phosphates, phosphazenes, phosphite esters, phosphines, phosphinates, polyphosphates, and phosphonium salts. Phosphates include triphenyl phosphate, tricresyl phosphate, isopropylated triphenyl phosphate, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, xylenyl-diphenyl phosphate; cresyl-diphenyl phosphate; 1,3-phenylenebis(di-2,6-xylenyl phosphate); 9,10-dihydro-9-oxa-10-phosphaphenanthrene-10-oxide (DOPO), tetraphenyl diphosphate (RDP), condensed phosphate compounds such as aromatic condensed phosphate compounds; and cyclic phosphate compounds, bis(diphenyl) phosphate of hydroquinone, bis(diphenyl) phosphate of bisphenol A, or the like, or their oligomeric or polymeric counterparts, or a combination thereof.

Examples of the phosphazene compounds include cyclic and chain phosphazene compounds. The cyclic phosphazene compounds (cyclophosphazenes) have a cyclic structure in which phosphorus-nitrogen double bonds are present in the molecule. Examples of phosphinate compounds include aluminum dialkylphosphinate, aluminum tris-(diethylphosphinate), aluminum tris-(methylethylphosphinate), aluminum tris-(diphenylphosphinate), zinc bis-(diethylphosphinate), zinc bis-(methylphosphinate), zinc bis-(diphenylphosphinate), titanyl bis-(diethylphosphinate), titanyl bis-(methylethylphosphinate), and titanyl bis-(diphenylphosphinate). Examples of polyphosphate compounds include melamine polyphosphate, melam polyphosphate, and melem polyphosphate. Examples of phosphonium salt compounds include tetraphenylphosphonium tetraphenylborate. Examples of the phosphite ester compounds include trimethylphosphite and triethylphosphite. Flame retardant compounds containing phosphorus-nitrogen bonds include phosphonitrilic chloride, phosphorus ester amides, phosphoric acid amides, phosphonic acid amides, phosphinic acid amides, and tris(aziridinyl) phosphine oxide.

Halogenated materials can also be used as flame retardants, for example bisphenols such as 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromobiphenyl ether, decabromodiphenylethane, as well as oligomeric and polymeric halogenated aromatic compounds, such as brominated styrene, 4,4-dibromobiphenyl, ethylene-bis(tetrabromophthalimide), or a copolycarbonate of bisphenol A and tetrabromobisphenol A and a carbonate precursor, e.g., phosgene. Metal synergists, e.g., antimony oxide, can also be used with the flame retardant.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, or Na₃AlF₆.

When the curable thermosetting composition includes a flame retardant, the flame retardant can be included in an amount of greater than 1 wt%, or 1 to 20 wt%, or 5 to 20 wt%, based on total weight of the curable thermosetting composition.

The curable thermosetting composition can further include inorganic or organic fillers, such as a particulate filler, a fibrous filler, or the like, or a combination thereof. Any inorganic and organic fillers, including those known in the art, can be used without limitation.

Exemplary fillers include, for example, clay, talc, kaolin, wollastonite, mica, calcium carbonate, magnesium carbonate; alumina, thiourea, glass powder, B- or Sn-based fillers such as zinc borate, zinc stannate and zinc hydroxystannate; metal oxides such as zinc oxide and tin oxide. alumina, silica (including fused silica, fumed silica, spherical silica, and crystalline silica), boron nitride (including spherical boron nitride), aluminum nitride, silicon nitride, magnesia, magnesium silicate, antimony trioxide, glass fibers (chopped, milled, or cloth), glass mat, glass bubbles, hollow glass microspheres, aramid fibers, quartz, or the like, or a combination thereof. Other exemplary inorganic fillers include powdered titanium ceramics such as any one of the titanates of barium, lead, strontium, calcium, bismuth, magnesium, or the like. Inorganic fillers also include hydrates such as aluminum hydroxide, magnesium hydroxide, zeolite, and hydrotalcite. In an aspect, the filler can be treated with a coupling agent as disclosed herein.

Glass fibers include those based on E, A, C, ECR, R, S, D, and NE glasses, as well as quartz. The glass fiber can have any suitable diameter, such as from 2 to 30 micrometers (µm), or 5 to 25 µm, or 5 to 15 µm. The length of the glass fibers before compounding are not limited and can be 2 to 7 millimeters (mm), or 1.5 to 5 mm. Alternatively, longer glass fibers or continuous glass fibers can be used. Suitable glass fiber is commercially available from suppliers such as Owens Corning, Nippon Electric Glass, PPG, and Johns Manville.

The organic filler can be, for example, polytetrafluoroethylene powder, polyphenylene sulfide powder, and poly(ether sulfone) powder, poly(phenylene ether) powder, polystyrene, divinylbenzene resin, or the like, or a combination thereof.

The filler can be selected based on the thermal expansion coefficient (CTE) and thermal conductivity requirements. For example, Al₂O₃, BN, AlN, or a combination thereof, can be used for an electronics module with high thermal conductivity. For example, MgO can be used for increased thermal conductivity and increased CTE. For example, SiO₂ (e.g., amorphous SiO₂) can be used for a lightweight module having a low CTE and a small dielectric constant.

When the curable thermosetting composition includes a filler, the filler can be included in an amount of greater than 1 wt%, or 1 to 50 wt%, or 1 to 30 wt%, or 10 to 30 wt%, based on total weight of the curable thermosetting composition.

Coupling agents, also referred to as adhesion promoters, include chromium complexes, silanes, titanates, zircon-aluminates, olefin-maleic anhydride copolymers, reactive cellulose esters, and the like. Exemplary olefin-maleic anhydride copolymers can include maleic anhydride grafted polyethylene, maleic anhydride grafted polypropylene, or a combination thereof. Exemplary silanes can include epoxysilane compound, aminosilane compounds methacryloxysilane compounds, vinylsilane compounds, or a combination thereof.

Examples of aminosilane coupling agents are γ -aminopropyltrimethoxy-silane, γ-aminopropyltriethoxysilane, N-beta(aminoethyl) γ-aminopropylmethyl-dimethoxysilane, N-beta(aminoethyl) γ -aminopropyltrimethoxysilane, and N-beta(aminoethyl)γ-aminopropyltriethoxysilane. Illustrative epoxysilane coupling agents include γ - glycidoxypropylmethyldiethoxysilane, gamma-glycidoxypropyltrimethoxysilane, and γ-glycidoxypropyltriethoxysilane. Examples of methacryloxysilane coupling agents include γ-methacryloxypropylmethyldimethoxysilane, γ -methacryloxypropyl-trimethoxysilane, γ-methacryloxypropyldiethoxysilane, and γ-methacryloxypropyltriethoxysilane.

Other exemplary silane coupling agents include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthio-carbamoyl tetrasulfide, dimethoxymethylsilylpropylbenzothiazolyl tetrasulfide, or the like, or a combination thereof. The silane coupling agent can be a polysulfide silane coupling agent having 2 to 4 sulfur atoms forming a polysulfide bridge. For example, the coupling agent can be a bis(3-triethoxysilylpropyl) di-, tri-, or tetrasulfide.

When the curable thermosetting composition includes a coupling agent, the coupling agent can be included in an amount of 0.01 to 5 wt%, or 0.05 to 5 wt%, or 0.1 to 5 wt%, based on total weight of the curable thermosetting composition.

The curable thermosetting composition can optionally include a solvent. The solvent can be, for example, a C₃₋₈ ketone, a C₃₋₈ *N*,*N-*dialkylamide, a C₄₋₁₆ dialkyl ether, a C₆₋₁₂ aromatic hydrocarbon, a C₁₋₃ chlorinated hydrocarbon, a C₃₋₆ alkyl alkanoate, a C₂₋₆ alkyl cyanide, or a combination thereof. Specific ketone solvents include, for example, acetone, methyl ethyl ketone, methyl isobutyl ketone, or a combination thereof. Specific C₄₋₈ *N,N-*dialkylamide solvents include, for example, dimethylformamide, dimethylacetamide, *N*-methyl-2-pyrrolidone, or a combination thereof. Specific dialkyl ether solvents include, for example, tetrahydrofuran, ethylene glycol monomethylether, dioxane, or a combination thereof. Specific aromatic hydrocarbon solvents include, for example, benzene, toluene, xylenes, styrene, divinylbenzenes, or a combination thereof. The aromatic hydrocarbon solvent can be non-halogenated. Specific C₃₋₆ alkyl alkanoates include, for example, methyl acetate, ethyl acetate, methyl propionate, ethyl propionate, or a combination thereof. Specific C₂₋₆ alkyl cyanides include, for example, acetonitrile, propionitrile, butyronitrile, or a combination thereof. Specific C₂₋₆ alkyl cyanides include, for example, acetonitrile, propionitrile, butyronitrile, or a combination thereof. For example, the solvent can be N,N-dimethylformamide, N,N-dimethylacetamide, N,N-diethylacetamide, N,N-dimethylmethoxyacetamide, N-methyl-2-pyrrolidone, N-cyclohexylpyrrolidinone, N-methylcaprolactam, 1,3-dimethyl-2-imidazolidone, 1,2-dimethoxyethane, 1,3-dioxane, 1,4-dioxane, tetrahydrofuran, γ-butyrolactone, γ-caprolactone, dimethylsulfoxide, benzophenone, methyl ethyl ketone, methyl isobutyl ketone, cyclohexanone, diglyme, triglyme, tetraglyme, N,N-dimethylethyleneurea, N,N-dimethylpropyleneurea, tetramethylurea, propylene glycol phenyl ether, anisole, veratrole, o-dichlorobenzene, chlorobenzene, trichloroethane, methylene chloride, chloroform, pyridine, picoline, ethyl lactate, n-butyl acetate, butyl cellosolve acetate, butyl carbitol acetate, ethyl cellosolve acetate, ethyl carbitol acetate, propylene carbonate, sulfolane, an ionic liquid, or a combination thereof.

When a solvent is utilized, the curable thermosetting composition can include 2 to 99 wt% of the solvent, based on weight total of the curable thermosetting composition. For example, the solvent amount can be 5 to 80 wt%, or 10 to 60 wt%, or 20 to 50 wt%, based on weight total of the curable thermosetting composition. The solvent can be chosen, in part, to adjust the viscosity of the curable thermosetting composition. Thus, the solvent amount can depend on variables including the type and the copolymer, the type and amount of other components such as curing additive, the type and amount of any auxiliary thermosetting resin(s), and the processing temperature used for any subsequent processing of the curable thermosetting composition, for example, impregnation of a reinforcing structure with the curable thermosetting composition for the preparation of a composite. The solvent can be anhydrous. For example, the solvent can include less than 100 parts per million (ppm), or less than 50 ppm, or less than 10 ppm of water based on total weight of the solvent.

The curable thermosetting composition can further include a curable unsaturated monomer composition, which can include, for example, a monofunctional styrenic compound (e.g., styrene), a monofunctional (meth)acrylic compound, or the like, or a combination thereof. For example, the curable unsaturated monomer composition can be an alkene-containing monomer or an alkyne-containing monomer. Exemplary alkene- and alkyne-containing monomers includes those described in U.S. Patent No. 6,627,704 to Yeager et al., and include (meth)acrylates, (meth)acrylamides, N-vinylpyrrolidone, and vinylazalactones as disclosed in U.S. Pat. No. 4,304,705 of Heilman et al. Exemplary monofunctional monomers include mono(meth)acrylates, such as methyl (meth)acrylate, ethyl (meth)acrylate, isopropyl (meth)acrylate, isooctyl (meth)acrylate, isobornyl (meth)acrylate, (meth)acrylic acid, n-hexyl (meth)acrylate, tetrahydrofurfuryl (meth)acrylate, N-vinylcaprolactam, N-vinylpyrrolidone, (meth)acrylonitrile, or the like, or a combination thereof.

The curable thermosetting composition can, optionally, further include one or more additional additives. Additional additives include, for example, dyes, pigments, colorants, antioxidants, heat stabilizers, light stabilizers, plasticizers, defoaming agents, lubricants, dispersants, flow modifiers, drip retardants, antiblocking agents, antistatic agents, flow-promoting agents, processing aids, substrate adhesion agents, mold release agents, toughening agents, low-profile additives, stress-relief additives, or the like, or a combination thereof. When present, the additional additives can be included in any effective amount, for example in an amount of 0.01 to 20 wt%, or 0.01 to 10 wt%, or 0.01 to 5 wt%, or 0.01 to 1 wt%, based on the total weight of the curable thermosetting composition.

The curable thermosetting composition can be prepared by combining the copolymer and the other optional components disclosed herein using any suitable method.

Also provided is a cured thermoset composition comprising a cured product of the curable thermosetting composition. There is no particular limitation on the method by which the curable thermosetting composition can be cured. The curable composition can, for example, be cured thermally or by using irradiation techniques, including UV irradiation or electron beam irradiation. For example, a cured product can be obtained by heating the curable thermosetting composition defined herein for a time and temperature sufficient to evaporate the solvent and effect curing. When heat curing is used, the temperature can be 30 to 400°C, or 50 to 250°C, or 100 to 250°C. The heating can be for 1 minute to 24 hours, or 1 minute to 6 hours, or 3 hours to 5 hours. The curing can be staged to produce a partially cured and often tack-free resin, which then is fully cured by heating for longer periods or temperatures within the aforementioned ranges. As used herein, the term "cured" encompasses products that are partially cured or fully cured.

The cured thermoset composition can have one or more desirable properties. For example, the thermoset composition can have a glass transition temperature of greater than or equal to 165°C, preferably greater than or equal to 170°C, more preferably 165 to 180°C. The thermoset composition can also advantageously exhibit a low dielectric constant (Dk), a low dissipation factor (Df), and reduced moisture absorption. For example, the thermoset composition can have a dielectric constant of less than 3.0, preferably less than 2.75, more preferably less than 2.6 at a frequency of 10 GHz. The thermoset composition can have a dissipation factor of less than 0.01, or less than 0.005 at a frequency of 10 GHz. Thus, thermoset compositions comprising the copolymer of the present disclosure can be particularly well suited for use in electronics applications.

The curable thermosetting compositions and cured thermoset compositions can be used in a variety of applications and uses, including any applications where conventional thermosetting compositions are used. For example, useful articles including the curable thermosetting composition or the cured thermoset composition can be in the form of a composite, a foam, a fiber, a layer, a coating, an encapsulant, an adhesive, a sealant, a molded component, a prepreg, a casing, a laminate, a metal clad laminate, an electronic composite, a structural composite, or a combination thereof. Exemplary uses and applications include coatings such as protective coatings, sealants, weather resistant coatings, scratch resistant coatings, and electrical insulative coatings; adhesives; binders; glues; composite materials such as those using carbon fiber and fiberglass reinforcements. When utilized as a coating, the disclosed compounds and compositions can be deposited on a surface of a variety of underlying substrates. For example, the compositions can be deposited on a surface of metals, plastics, glass, fiber sizings, ceramics, stone, wood, or any combination thereof. The disclosed compositions can be used as a coating on a surface of a metal container (e.g., aluminum or steel), such as those commonly used for packaging and containment in the paint and surface covering industries. The curable thermosetting composition and the cured thermoset composition derived therefrom can also be particularly well suited for use in forming electrical components and computer components.

Methods of forming a composite can include impregnating a reinforcing structure with a curable thermosetting composition; partially curing the curable thermosetting composition to form a prepreg; and laminating a plurality of prepregs. The reinforcing structure can be a porous base material such as a fibrous preform or substrate, or other porous material comprising a ceramic, a polymer, a glass, carbon, or a combination thereof. For example, the porous base material can be woven or non-woven glass fabric, a fiberglass fabric, or carbon fiber. When the article includes a fibrous preform, the method of manufacturing the article can include forming the article from the curable thermosetting composition by coating or impregnating the preform with the curable composition. The impregnated fibrous preform can optionally be shaped before or after removing the solvent. In some aspects, the curable thermosetting composition layer can further comprise a woven or nonwoven glass fabric. For example, the curable layer can be prepared by impregnating the glass fabric with a curable composition and removing the solvent from the impregnated glass fabric. Exemplary reinforcing structures are described, for example, in Anonymous (Hexcel Corporation), "Prepreg Technology", March 2005, Publication No. FGU 017b; Anonymous (Hexcel Corporation), "Advanced Fibre Reinforced Matrix Products for Direct Processes", June 2005, Publication No. ITA 272; and Bob Griffiths, "Farnborough Airshow Report 2006", CompositesWorld.com, September 2006. The weight and thickness of the reinforcing structure are chosen according to the intended use of the composite using criteria well known to those skilled in the production of fiber reinforced resin composites. The reinforced structure can contain various finishes suitable for the thermosetting components of the curable thermosetting composition.

The method of manufacturing the articles from the curable thermosetting composition can include partially curing the curable thermosetting composition to form a prepreg, or fully curing the curable thermosetting composition to form a composite article. References herein to properties of the "cured composition" refer to a composition that is substantially fully cured. For example, the resin in a laminate formed from prepregs is typically substantially fully cured. One skilled in the thermoset arts can determine whether a sample is partially cured or substantially fully cured without undue experimentation. The curing can be before or after removing the solvent from the curable composition. In addition, the article can be further shaped before removal of the solvent or after removal of the solvent, before curing, after partial curing, or after full curing, for example by thermoforming. In an aspect, the article is formed, and the solvent is removed; the article is partially cured (B-staged); optionally shaped; and then further cured.

Commercial-scale methods of forming composites are known in the art, and the curable thermosetting compositions described herein are readily adaptable to existing processes and equipment. For example, prepregs are often produced on treaters. The main components of a treater include feeder rollers, a resin impregnation tank, a treater oven, and receiver rollers. The reinforcing structure (E-glass, for example) is usually rolled into a large spool. The spool is then put on the feeder rollers that turn and slowly roll out the reinforcing structure. The reinforcing structure then moves through the resin impregnation tank, which contains the curable thermosetting composition. The curable composition impregnates the reinforcing structure. After emerging from the tank, the coated reinforcing structure moves upward through the vertical treater oven, which is typically at a temperature of 175 to 200°C, and the solvent is evaporated. The resin begins to polymerize at this time. When the composite comes out of the tower it is sufficiently cured so that the web is not wet or tacky. The cure process, however, is stopped short of completion so that additional curing can occur when laminate is made. The web then rolls the prepreg onto a receiver roll.

Electrical and electronic articles including or derived from the curable thermosetting composition are also provided. Articles include those comprising printed circuits as used in medical or aerospace industries. Still other articles include antennae and like articles. Articles such as printed circuit boards are used, for example, in lighting, solar energy, displays, cameras, audio and video equipment, personal computers, mobile telephones, electronic notepads, and similar devices, or office automation equipment. For example, electrical parts can be mounted on printed circuit boards comprising a laminate. Other exemplary articles prepared from the curable composition for various applications can include copper clad laminates (CCL), for example, metal core copper clad laminates (MCCCL), composite articles, and coated articles, for example multilayer articles.

Dielectric layers can be prepared from the curable thermosetting composition can be useful in a circuit assembly, for example, in a metal-clad laminate such as a copper clad laminate. For example, a laminate can comprise a dielectric layer, a conductive metal circuit layer disposed on the dielectric layer, and optionally, a heat dissipating metal matrix layer disposed on the dielectric layer on a side opposite the conductive metal layer. The dielectric layer can optionally include a fibrous preform (e.g., a fabric layer). For example, the dielectric layer can further include a glass fabric layer.

The conductive metal layer can be in the form of a circuit, and can be copper, zinc, tin, brass, chromium, molybdenum, nickel, cobalt, aluminum, stainless steel, iron, gold, silver, platinum, titanium, or the like, or a combination thereof. Other metals include a copper molybdenum alloy, a nickel-cobalt iron alloy such as KOVAR, available from Carpenter Technology Corporation, a nickel-iron alloy such as INVAR, available from National Electronic Alloys, Inc., a bimetal, a trimetal, a trimetal derived from two-layers of copper and one layer of INVAR, and a trimetal derived from two layers of copper and one layer of molybdenum. Exemplary metal layers comprise copper or a copper alloy. Alternatively, wrought copper foils can be used. Conductive metal layers can have a thickness of 2 to 200 micrometers (µm), or 5 to 50 µm, or 5 to 40 µm.

A heat dissipating metal matrix layer can be a thermally conductive metal such as aluminum, boron nitride, aluminum nitride, copper, iron, steel, or the like, or a combination thereof. A thermally conductive, electrically conductive metal can be used provided that the metal is electrically isolated from the metal circuit layer. Preferred supporting metal matrix layers can have a thickness of 0.1 to 20 millimeters (mm), or 0.5 to 10 mm, or 0.8 to 2 mm.

The conductive metal layer and the supporting metal matrix layers can be pretreated to have high surface roughness for enhanced adhesion to the dielectric layer. Treatment methods include washing, flame treatment, plasma discharge, corona discharge, or the like, for example to enhance adhesion of the metal layer. The dielectric layer can adhere firmly to the conductive metal layer or the heat dissipation layer without using an adhesive, or an adhesive can be used to improve adhesion of the dielectric layer to the conductive metal layer or the heat dissipation layer. Exemplary adhesives used to bond the composite sheet to a metal include polyimide adhesives, acrylic adhesives, epoxies, or the like, or a combination thereof.

The copper clad laminates can be made by thermal lamination of one or more dielectric layers, one or more conductive metal layers, and a supporting metal matrix layer, under pressure without using thermosetting adhesives. The dielectric layer can be prepared from the curable thermosetting composition and can be prepared prior to the thermal lamination step by a solvent casting process to form a layer. For example, the dielectric layer, the conductive metal layer, and the thermal dissipation layer can be thermally laminated together by an adhesive-free process under pressure to form a laminate. The electrically conductive metal layer can optionally be in the form of a circuit before laminating, or the conductive metal layer can optionally be etched to form the electrical circuit following lamination. The laminating can be by hot press or roll calendaring methods, for example, a roll-to-roll method. The conductive metal layer in a copper clad laminate can further be patterned to provide a printed circuit board. Furthermore, the copper clad laminates can be shaped to provide a circuit board having the shape of a sheet, a tube, or a rod.

Alternatively, laminates for a circuit assembly can be made by a solution casting method in which the curable thermosetting composition is cast directly onto the electrically conductive metal layer, followed by lamination to the heat dissipating metal matrix layer. For example, the curable thermosetting composition can be cast directly onto the heat dissipating metal matrix layer, followed by lamination to the electrically conductive metal layer.

Multilayer laminates including additional layers can also be made by thermal lamination in one step or in two or more consecutive steps by such processes as hot press or roll calendaring methods. For example, seven layers or fewer can be present in the laminate, or sixteen layers or fewer. In an aspect, a laminate can be formed in one step or in two or more consecutive steps with sequential layers of fabric-thermoset-metal-thermoset-fabric-thermoset-metal foil or a sub-combination thereof with fewer layers, such that the laminate comprises a layer of thermoset film between any layer of metal foil and any layer of fabric. In another aspect, a first laminate can be formed in one step or in two or more consecutive steps with a layer of fabric between two layers of the thermoset, such as a layer of woven glass fabric between two layers of the thermoset. A second laminate can then be prepared by laminating a metal foil to a thermoset side of the first laminate.

Printed circuit boards prepared from the curable thermosetting composition can have an overall thickness of 0.1 to 20 mm, and specifically 0.5 to 10 mm, wherein overall thickness refers to an assembly comprising a layer each of the dielectric layer, the electrically conductive metal layer, and the supporting metal matrix layer. Circuit assemblies can have an overall thickness of 0.5 to 2 mm, and specifically 0.5 to 1.5. There is no particular limitation on the thickness of the dielectric layer and can be 5 to 1500 µm, or 5 to 750 µm, or 10 to 150 µm, or 10 to 100 µm. For example, the printed circuit board can be a metal core printed circuit board (MCPCB) for use in a light emitting diode (LED) application.

The curable thermosetting composition can be used as a coating, for example in the preparation of a multilayer article. A method of manufacturing the coating can include combining the curable thermosetting composition and optionally a fluoropolymer and forming a coating on a substrate. For example, a multilayer article can be manufactured by forming a layer including the curable thermosetting composition, removing the solvent from the layer and optionally curing to provide a primer layer, forming a second layer comprising a ceramic (e.g., Al₂O₃, TiO₂, ZrO₂, Cr₂O₃, SiO₂, MgO, BeO, Y₂O₃, Al₂O₃-SiO₂, MgO-ZrO₂, SiC, WC, B₄C, TiC, Si₃N₄, TiN, BN, AlN, TiB, ZrB₂, or the like), a thermoplastic polymer, a fluoropolymer (e.g., polytetrafluoroethylene, tetrafluoroethylene-perfluoroalkylvinylether copolymers, tetrafluoroethylene-hexafluoropropylene copolymers, polychlorotrifluoroethylene, tetrafluoroethylene-ethylene copolymers, polyvinylidene fluoride, or the like), or a combination thereof on the primer layer to provide the multilayer article, and optionally thermally treating the multilayer article to cure the curable thermosetting composition. In some aspects, the second layer can further include the curable thermosetting composition.

Additional applications for the curable thermosetting compositions include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and flarings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cut-off devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toner resins for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other applications.

Processes useful for preparing the articles and materials include those generally known to the art for the processing of thermosetting resins. Such processes have been described in the literature as in, for example, Engineered Materials Handbook, Volume 1, Composites, ASM International Metals Park, Ohio, copyright 1987 Cyril A. Dostal Senior Ed, pp. 105-168 and 497-533, and "Polyesters and Their Applications" by Bjorksten Research Laboratories, Johan Bjorksten (pres.) Henry Tovey (Ch. Lit. Ass.), Betty Harker (Ad. Ass.), James Henning (Ad. Ass.), Reinhold Publishing Corporation, New York, 1956. Processing techniques include resin transfer molding; sheet molding; bulk molding; pultrusion; injection molding, including reaction injection molding (RIM); atmospheric pressure molding (APM); casting, including centrifugal and static casting open mold casting; lamination including wet or dry lay up and spray lay up; also included are contact molding, including cylindrical contact molding; compression molding; including vacuum assisted resin transfer molding and chemically assisted resin transfer molding; matched tool molding; autoclave curing; thermal curing in air; vacuum bagging; pultrusion; Seeman's Composite Resin Infusion Manufacturing Processing (SCRIMP); open molding, continuous combination of resin and glass; and filament winding, including cylindrical filament winding. For example, an article can be prepared by a resin transfer molding process.

Also provided is an article derived from the curable thermosetting composition, wherein the article is a composite, a foam, a fiber, a layer, a coating, an encapsulant, an adhesive, a sealant, a molded component, a prepreg, a casing, a cast article, a laminate, or a combination thereof; or wherein the article is a metal clad laminate, an electronic composite, a structural composite, or a combination thereof. Articles can be manufactured as disclosed herein, for example by casting, molding, extruding, or the like, and removing the solvent from the formed article. In an aspect, the article can be a layer, and can be formed by casting the curable composition onto a substrate to form a cast layer. The solvent can be removed by any number of means, including by heating the cast layer, heating the cast layer under heat and pressure, for example by laminating the cast layer to another substrate. In an aspect, articles prepared by the above-described methods can include adhesives, packaging material, capacitor films, or circuit board layers. In an aspect, articles prepared from the curable composition can be a dielectric layer, or a coating disposed on a substrate, for example a wire or cable coating. For example, the article can be a dielectric layer in a circuit material, for example in a printed circuit board, used, for example, in lighting or communications applications. Other exemplary articles prepared from the curable composition can be one or more painted layers. The curable compositions can be used to prepare articles as disclosed herein for other curable thermosetting compositions.

This disclosure is further illustrated by the following examples, which are nonlimiting.

### EXAMPLES

### Example 1: Preparation of alternating co-oligomer

The dicyclopentadiene dimethoxy benzene alternating co-oligomer was prepared according to Scheme 1.

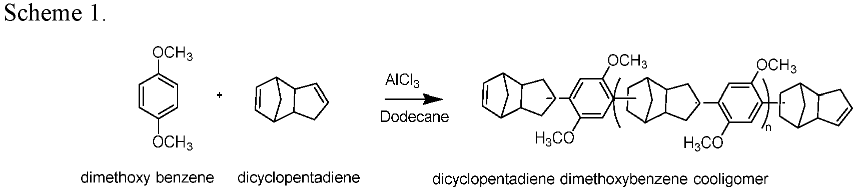

Synthesis of dicyclopentadiene (DCPD) and dimethoxy benzene copolymer (I): A 100 mL, 3 neck round bottom flask, equipped with mechanical stirrer, condenser, and a nitrogen inlet was purged with nitrogen. 6.28 grams (0.045 moles) of 1,4-dimethoxy benzene, 20 mL of o-dichlorobenzene (ODCB) and 1.33 g of (0.01 moles) of aluminum chloride were charged to the reaction flask. The contents of the reaction mixture were heated to 100 °C. When the contents of the reaction flask equilibrated, 6.6 grams (0.05 moles) of dicyclopentadiene (DCPD) dissolved in 10 mL of ODCB was added to the flask dropwise through an addition funnel. The rate of addition of DCPD was maintained such that all the DCPD solution was added in 2-3 hours. The contents were allowed to react for 16 hours after which a sample was removed and the molecular weight was tested using GPC. Periodical addition of AlCl₃ catalyst was performed to raise the molecular weight of the reaction. 100 mL of 5 wt% NaOH solution was added to the contents of the flask to quench the cations and it was allowed to stir for 1 hour. The contents of the reaction were then precipitated in methanol. The oligomer was washed with 50:50 by volume of methanol and water (shaken over a laboratory shaker) for 30 mins and filtered. Similarly, the polymer was washed three times with methanol and a light grey colored powder was obtained on drying. The ¹H NMR of the copolymer is shown in FIG. 1. Table 1 shows the properties of the alternating copolymer.

**Table 1.**

| | |
|---|---|
| M_{w} (g/mol) | 3300 |
| Mₙ (g/mol) | 1105 |
| PDI | 2.98 |
| T_{g} (°C) | 153 |
| T_{d,5} (°C) (N₂) | 342 |
| T_{d,50} (°C) (N₂) | 427 |

### Prophetic Example 2: Preparation of dicyclopentadiene alternating co-oligomer

The dicyclopentadiene tetramethylbenzene co-oligomer will be prepared as shown in Scheme 2 using the method as described in Example 1.

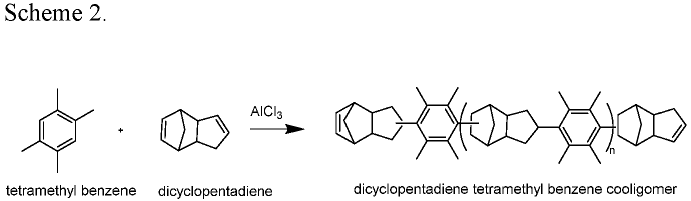

### Prophetic Example 3: Preparation of polyphenylene ether dicyclopentadiene block copolymer

Synthesis of 2,6-dimethyl phenol capped DCPD-DMB co-oligomer (II): The oligomer of DCPD and 1,4-dimethoxy benzene was synthesized using Example 1 above except that after 18 hours of reaction at 100 C, 1.83 g of 2,6-xylenol was added to the reaction flask. The reaction was allowed to proceed for 16 more hours to ensure the completion of the end capping reaction.

Prophetic- Synthesis of PPE-DCPD-co-DMB-PPE triblock copolymer (III): 2,6-dimethyl phenol capped DCPD-DMB co-oligomer (II) will be polymerized with 2,6-dimethyl phenol by oxidative coupling polymerization of 2,6-dimethyl phenol capped DCPD-DMB co-oligomer (II) and 2,6-dimethyl phenol will be dissolved in toluene in a 500 ml glass reactor. To this solution dimethylbutyl amine, dibutyl amine, di-tert-butylethylamine, Maquat and a mixture of Cu₂O and HBr (aq) will be added. Oxygen will be bubbled through the reaction for 2 hours between the temperatures of 25-40 °C. After the oxygen flow is stopped, aqueous solution of the trisodium salt of trinitriloacetic acid will be added. The temperature will be increased to 60 °C and maintained for 2 hours. Toluene phase will be then separated and the PPE-PBd-PPE block copolymer will be isolated by precipitation into methanol. The product will be dried under vacuum and nitrogen.

Synthesis of functionalized PPE-DCPD-co-DMB-PPE triblock copolymer (IV): PPE-DCPDcoDMB-PPE triblock copolymer will be dissolved in toluene. The temperature will be increased to 120 °C to conduct azeotropic distillation. The temperature will be reduced to 75 °C and dimethyl aminopyridine will be added to the reaction solution. Once DMAP is dissolved methyl methacrylate will be added slowly (20 min) into the reaction mixture. After the addition, the temperature will be raised to 110 °C for gentle reflux. The material will be isolated by precipitation from methanol.

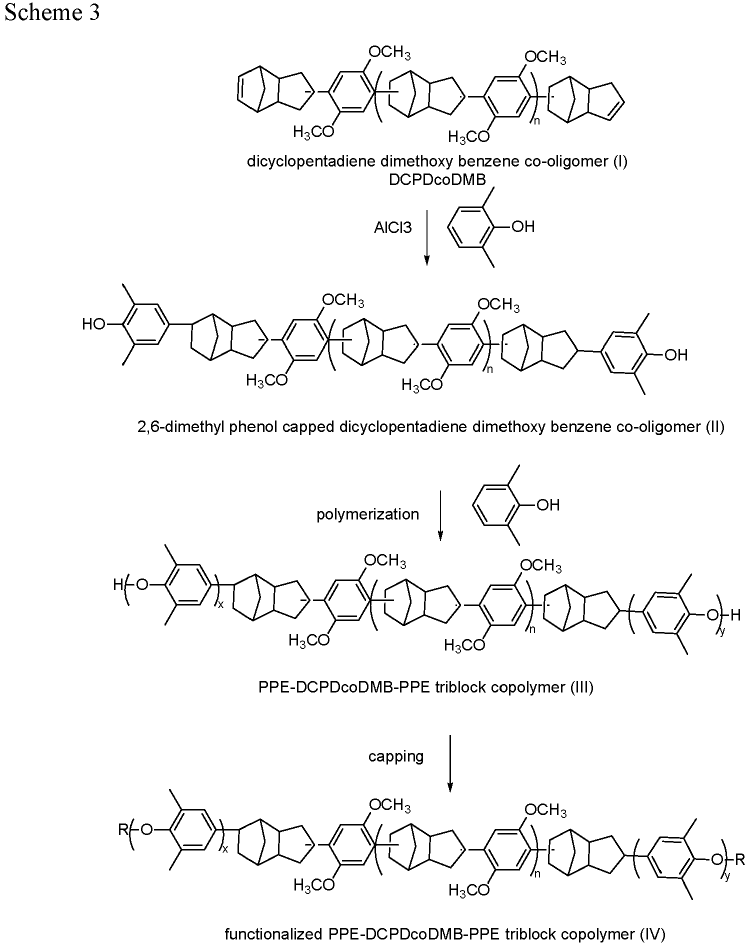

Prophetic Example 4 Prophetic example 3 will be repeated by using dicyclopentadiene tetramethylbenzene co-oligomer.

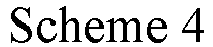

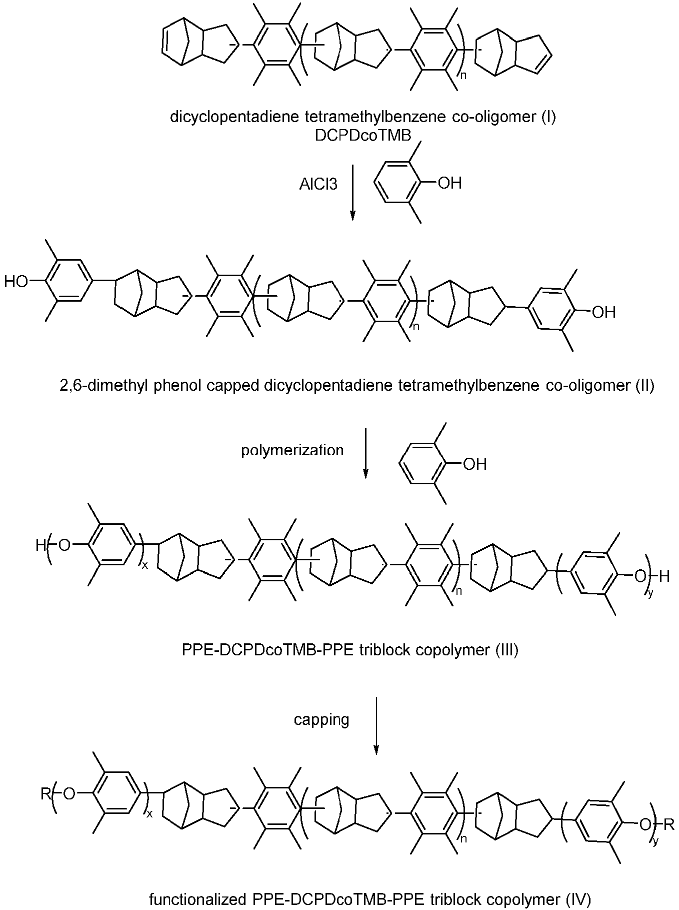

### Prophetic Example 5

Polycyclopentadiene oligomer can be synthesized via Diels Alder addition polymerization forming the structure below (STAUDINGER, H. : Hochpolymere Verbindungen. XIV. ~ber die I~onstitution des Dicyclopentadiens. Ann. 467, 73 (1928) and H. BRUSON: Hochpolymere Verbindungen VII. 0bet das Dicyclopentadien und weitere polymere Cyclopentadien. Ann. 447, 97 (1926). The unsaturated double bonds can then be used for alkylation of phenols followed by oxidative coupling polymerization.

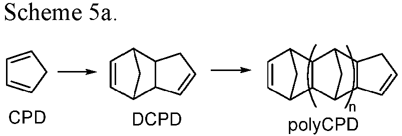

Synthesis of 2,6-dimethyl phenol functionalized polyCPD (I): The polycyclopentadiene oligomer shown above can be functionalized with DMP. Polycyclopentadiene is dissolved in o-dichloro benzene. To this solution are added AlCl₃ and 2,6-dimethyl phenol. The reaction is carried out at 100 °C for 8 hours. The 2,6-dimethyl phenol functionalized polyCPD obtained by precipitation into methanol, followed by filtration and drying.

PolyCPD can undergo reaction with DMP, followed by oxidative polymerization, and functionalized with methacrylate as shown in Scheme 5b.

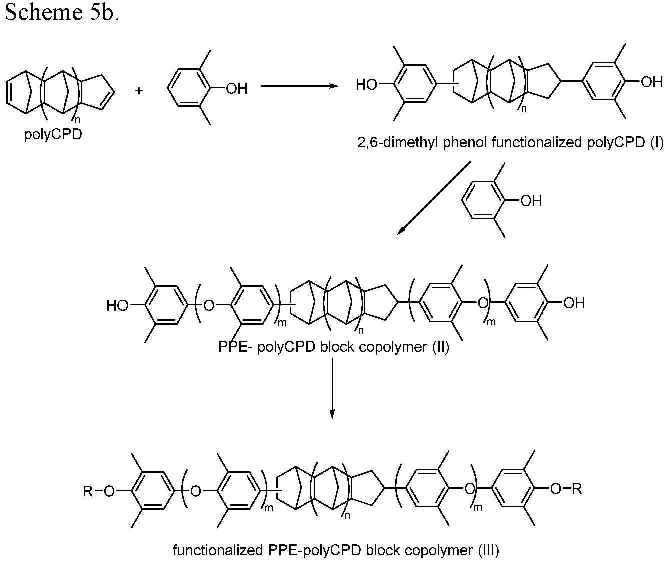

Synthesis of polyphenylene ether-polyCPD block copolymer (II): 2,6-dimethyl phenol functionalized polyCPD oligomer is polymerized with 2,6-dimethyl phenol by oxidative coupling polymerization. 2,6-dimethyl phenol functionalized polyCPD oligomer and 2,6-dimethyl phenol are dissolved in toluene in a 500 ml glass reactor. To this solution dimethylbutyl amine, dibutyl amine, di-tert-butylethylene diamine, Maquat and a mixture of Cu₂O and HBr (aq) are added. Oxygen is bubbled through the reaction for 2 hours between the temperatures of 25-40 °C. After the oxygen flow is stopped, aqueous solution of the trisodium salt of trinitriloacetic acid is added. The temperature is increased to 60 °C and maintained for 2 hours. Toluene phase was then separated and the copolymer is isolated by precipitation into methanol. The product is dried under vacuum and nitrogen.

Synthesis of methacrylate capped polyphenylene ether grafted polyCPD block copolymer (III): PPE-polyDCPD copolymer is dissolved in toluene. The temperature is increased to 120 °C to conduct azeotropic distillation. The temperature is reduced to 75 °C and dimethyl aminopyridine is added to the reaction solution. Once DMAP is dissolved methyl methacrylate is added slowly (20 min) into the reaction mixture. After the addition, the temperature is raised to 110 °C for gentle reflux. The material is isolated by precipitation from methanol.

DCPD homo-oligomer (Scheme 6) obtained from three different synthetic routes can be used to make DCPD homo-oligomer functionalized with 2,6-dimethyl phenol (DMP), a block copolymer, and a block copolymer functionalized with cross-linking groups will be prepared according to Scheme 7.

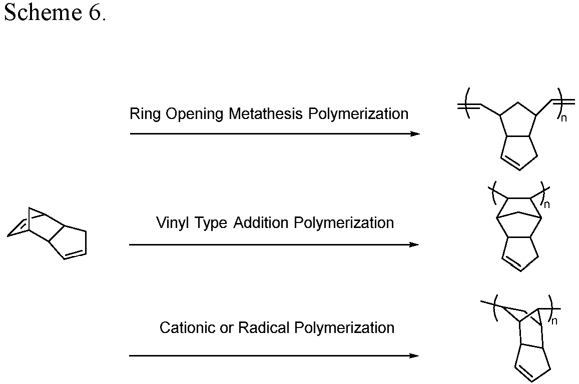

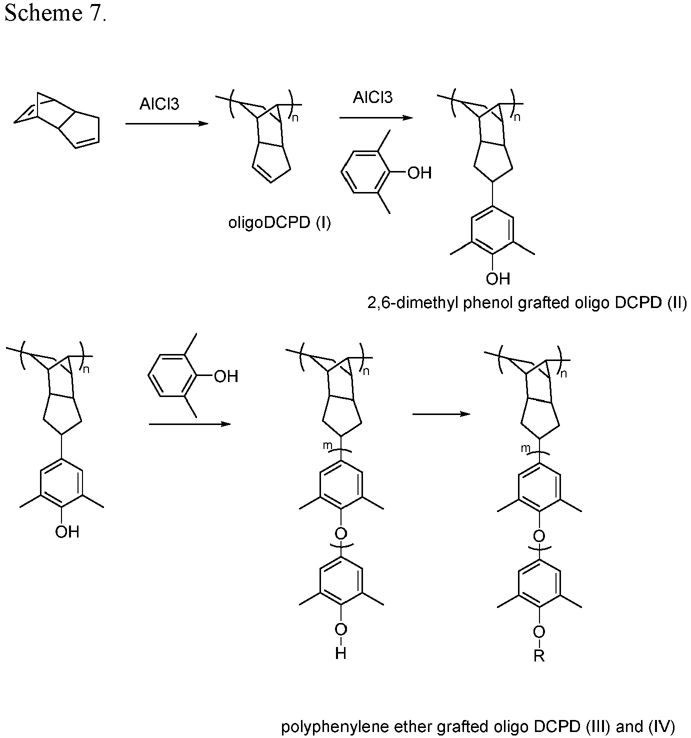

### Prophetic Example 6

Synthesis of DCPD oligomer (I) and 2,6-dimethyl phenol functionalized DCPD oligomer (II): 100 mL, 3 neck round bottom flask, equipped with mechanical stirrer, condenser, and a nitrogen inlet was purged with nitrogen. 10.0 grams (0.0758 moles) of dicyclopentadiene, 100 g of o-dichlorobenzene (ODCB) and 2.0 g of (0.01515 moles) of aluminum chloride were charged to the reaction flask and stirred at room temperature for 3 hours. A sample from the reaction was taken after 4 hours and precipitated in methanol and a white precipitate was observed. 0.925 g of 2,6-xylenol (0.00758 moles) was added to the reaction flask and the contents of the flask were heated to 100 °C overnight. A significant amount of black precipitate was observed at 100 °C. The solution was precipitated into methanol and filtered to obtain a brown solid. The brown solid was dissolved in methylene chloride and reprecipitated in methanol.

Synthesis of polyphenylene ether grafted polyDCPD (III): 2,6-dimethyl phenol functionalized DCPD oligomer is polymerized with 2,6-dimethyl phenol by oxidative coupling polymerization. 2,6-dimethyl phenol functionalized DCPD oligomer and 2,6-dimethyl phenol are dissolved in toluene in a 500 ml glass reactor. To this solution dimethylbutyl amine, dibutyl amine, di-tert-butylethylamine, Maquat and a mixture of Cu₂O and HBr (aq) are added. Oxygen is bubbled through the reaction for 2 hours between the temperatures of 25-40 °C. After the oxygen flow is stopped, aqueous solution of the trisodium salt of trinitriloacetic acid is added. The temperature is increased to 60 °C and maintained for 2 hours. Toluene phase was then separated and the copolymer is isolated by precipitation into methanol. The product is dried under vacuum and nitrogen.

Synthesis of methacrylate capped polyphenylene ether grafted polyDCPD (IV): PPE-polyDCPD copolymer is dissolved in toluene. The temperature is increased to 120 °C to conduct azeotropic distillation. The temperature is reduced to 75 °C and dimethyl aminopyridine is added to the reaction solution. Once DMAP is dissolved methyl methacrylate is added slowly (20 min) into the reaction mixture. After the addition, the temperature is raised to 110 °C for gentle reflux. The material is isolated by precipitation into methanol.

Further aspects of this invention are
a copolymer composition as defined in the claims, wherein the copolymer is a block copolymer derived from a dicyclopentadiene copolymer component of Formulas D1 or D2,
and a varnish composition comprising the curable thermosetting composition defined in the claims, and a solvent.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A copolymer comprising a polyphenylene ether component and a dicyclopentadiene copolymer component comprising a structure of Formulas D1, D2, D3-1, D3-2, or D3-3 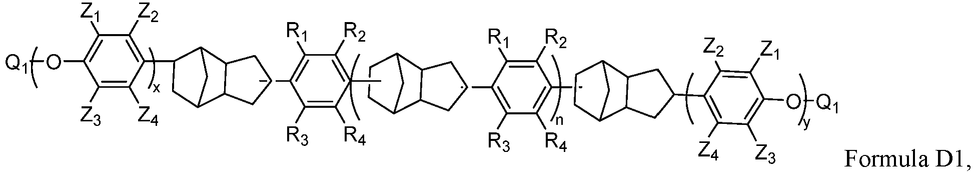 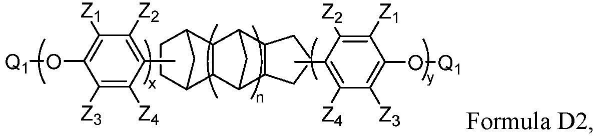 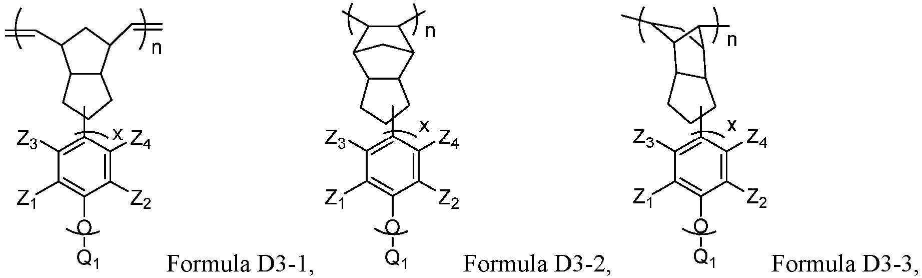 wherein:
each occurrence of Z¹ and Z₃ independently comprises halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms;
each occurrence of Z₂ and Z₄ independently comprises hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms;
each occurrence of R₁ to R₄ independently comprises hydrogen, C₁-C₁₂ hydrocarbyl, or C₁-C₁₂ hydrocarbyloxy;
x is at least one 1 to 50;
y is at least one 1 to 50;
n at least one 1 to 100; and
Q₁ comprises a single bond, hydrogen, or a terminal functional group.

2. The copolymer composition of claim 1, wherein the dicyclopentadiene copolymer component of Formula D1 is derived from Formula P1, the dicyclopentadiene copolymer component of Formula D2 is derived from Formula P2, the dicyclopentadiene copolymer component of Formula D3-1 is derived from Formula P3-1, the dicyclopentadiene copolymer component of Formula D3-2 is derived from Formula P3-2, and the dicyclopentadiene copolymer component of Formula D3-3 is derived from Formula P3-3, wherein n is 1 to 100:

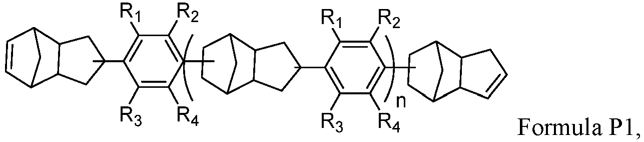

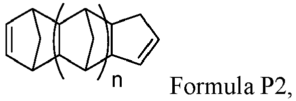

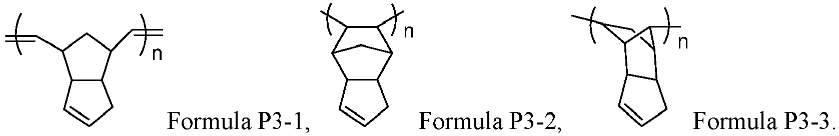

3. The copolymer composition of claim 1 or 2, wherein the polyphenylene ether component has the following structure 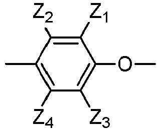
Z₁ and Z₃ each independently comprise halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and
Z₂ and Z₄ each independently comprise hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms

4. The copolymer composition of any one of the preceding claims, wherein the copolymer is a block copolymer derived from a dicyclopentadiene copolymer component of Formulas D1 or D2.

5. The copolymer composition of Claim 4, comprising at least two A blocks comprising the dicyclopentadiene copolymer component, preferably wherein the copolymer is an A-B-A triblock copolymer.

6. The copolymer composition of Claim 4, comprising at least two B blocks comprising the polyphenylene ether component, preferably wherein the copolymer is a B-A-B triblock copolymer.

7. The copolymer of any one of Claims 1 to 3 comprising a graft copolymer derived from the dicyclopentadiene copolymer component of Formulas D3-1, D3-2, or D3-3.

8. The copolymer composition of any one of the preceding claims wherein the dicyclopentadiene copolymer component comprises at least one terminal functional group comprising a vinyl benzene ether terminal functional group, a methacrylate terminal functional group, an acrylate terminal functional group, an epoxy terminal functional group, a hydroxyl terminal functional group, a cyanate ester terminal functional group, an amine terminal functional group, maleimide terminal functional group, an allyl terminal functional group, a styrenic terminal functional group, an activated ester terminal functional group, or an anhydride terminal functional group.

9. A method of making the dicyclopentadiene copolymer of any one of Claims 1 to 8, the method comprising covalently coupling a dicyclopentadiene precursor of Formulas P1, P2, P3-1, P3-2, or P3-3 with a substituted or unsubstituted monohydric phenol, wherein the dicyclopentadiene precursor and the monohydric phenol comprise complementary reactive groups.

10. A method of making the copolymer of any one of Claims 1 to 8, the method comprising:
oxidatively polymerizing a substituted or unsubstituted monohydric phenol from a dicyclopentadiene copolymer component to provide the copolymer; or
covalently coupling a dicyclopentadiene precursor of Formulas P1, P2, P3-1, P3-2, or P3-3 and a polyphenylene ether oligomer, wherein the dicyclopentadiene precursor and the polyphenylene ether oligomer comprise complementary reactive groups.

11. A curable thermosetting composition comprising the copolymer of any one of Claims 1 to 8, and optionally further comprising
one or more of a crosslinking agent, a curing agent, a curing catalyst, a curing initiator, or a combination thereof;
one or more of a flame retardant, a filler, a coupling agent, or a combination thereof;
or a combination thereof.

12. A cured thermoset composition comprising a cured product of the curable thermosetting composition of claim 11.

13. An article comprising the cured thermoset composition of Claim 12, wherein the article is a composite, a foam, a fiber, a layer, a coating, an encapsulant, an adhesive, a
sealant, a molded component, a prepreg, a casing, a cast article, a laminate, or a combination thereof; or
the article is a metal clad laminate, an electronic composite, a structural composite, or a combination thereof.

14. A varnish composition comprising the curable thermosetting composition of Claim 11 and a solvent.

15. An article manufactured from the varnish composition of Claim 14, preferably wherein the article is a fiber, a layer, a coating, a cast article, a prepreg, a composite, or a laminate; or wherein the article is a metal clad laminate.

## Patentansprüche

1. Copolymer, umfassend eine Polyphenylenether-Komponente und eine Dicyclopentadien-Copolymerkomponente, umfassend eine Struktur der Formeln D1, D2, D3-1, D3-2 oder D3-3 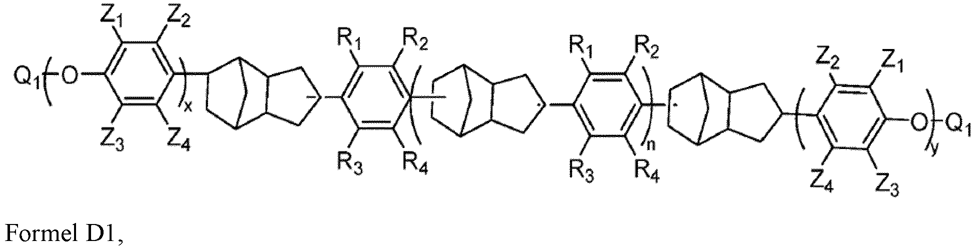 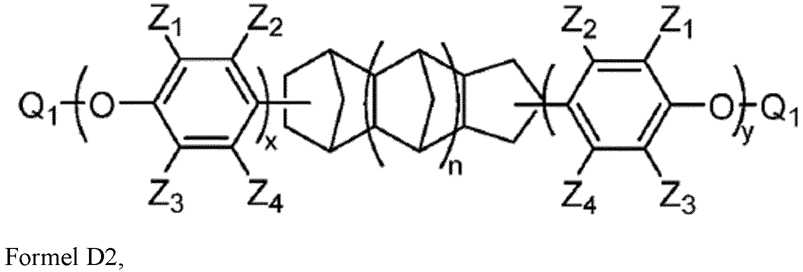 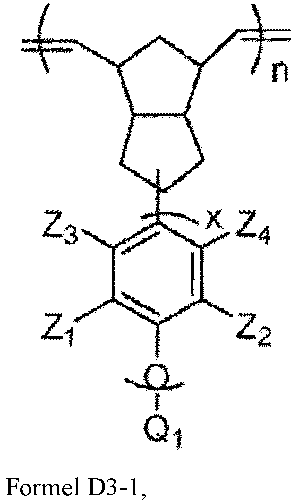 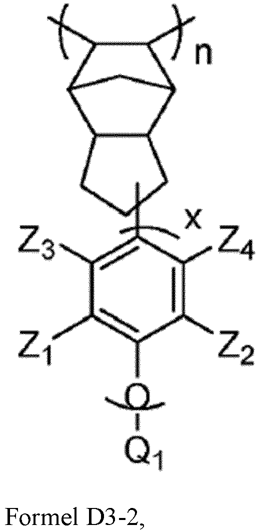 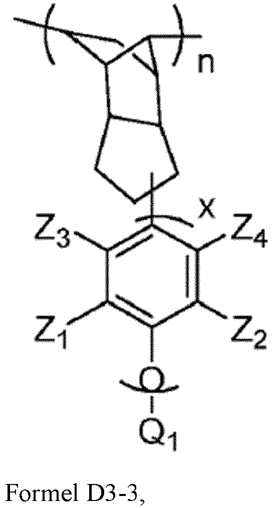 wobei:
jedes Auftreten von Z₁ und Z₃ unabhängig umfasst Halogen, unsubstituiertes oder substituiertes C₁-C₁₂-Hydrocarbyl, vorausgesetzt, dass die Hydrocarbylgruppe nicht tertiäres Hydrocarbyl, C₁-C₁₂-Hydrocarbylthio, C₁-C₁₂-Hydrocarbyloxy oder C₂-C₁₂-Halohydrocarbyloxy ist, wobei mindestens zwei Kohlenstoffatome die Halogen- und Sauerstoffatome trennen;
jedes Auftreten von Z₂ und Z₄ unabhängig umfasst Wasserstoff, Halogen, unsubstituiertes oder substituiertes C₁-C₁₂-Hydrocarbyl, vorausgesetzt, dass die Hydrocarbylgruppe nicht tertiäres Hydrocarbyl, C₁-C₁₂-Hydrocarbylthio, C₁-C₁₂-Hydrocarbyloxy oder C₂-C₁₂-Halohydrocarbyloxy ist, wobei mindestens zwei Kohlenstoffatome die Halogen- und Sauerstoffatome trennen;
jedes Auftreten von R₁ bis R₄ unabhängig umfasst Wasserstoff, C₁-C₁₂-Hydrocarbyl oder C₁-C₁₂-Hydrocarbyloxy,
x mindestens eine Zahl von 1 bis 50 ist;
y mindestens eine Zahl von 1 bis 50 ist;
n mindestens eine Zahl von 1 bis 100; und
Q₁ eine Einfachbindung, Wasserstoff oder eine terminale funktionelle Gruppe umfasst.

2. Copolymerzusammensetzung nach Anspruch 1, wobei die Dicyclopentadien-Copolymerkomponente der Formel D1 von Formel P1 abgeleitet ist, die Dicyclopentadien-Copolymerkomponente der Formel D2 von Formel P2 abgeleitet ist, die Dicyclopentadien-Copolymerkomponente der Formel D3-1 von Formel P3-1 abgeleitet ist, die Dicyclopentadien-Copolymerkomponente der Formel D3-2 von Formel P3-2 abgeleitet ist, und die Dicyclopentadien-Copolymerkomponente der Formel D3-3 von Formel P3-3 abgeleitet ist, wobei n 1 bis 100 ist:

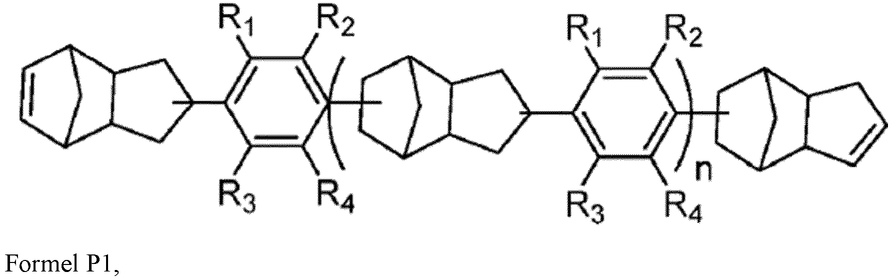

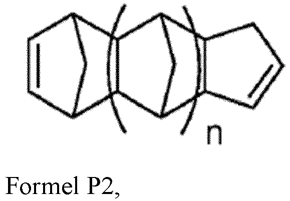

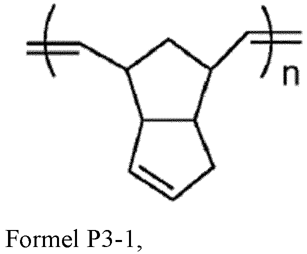

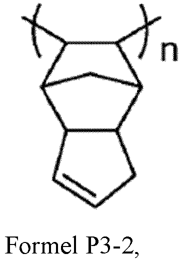

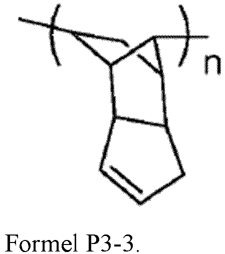

3. Copolymerzusammensetzung nach Anspruch 1 oder 2, wobei die Polyphenylenetherkomponente die folgende Struktur aufweist: 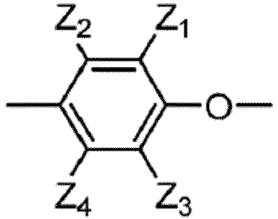
Z₁ und Z₃ umfassen jeweils unabhängig voneinander Halogen, unsubstituiertes oder substituiertes C₁-C₁₂-Hydrocarbyl, vorausgesetzt, dass die Hydrocarbylgruppe nicht tertiäres Hydrocarbyl, C₁-C₁₂-Hydrocarbylthio, C₁-C₁₂-Hydrocarbyloxy oder C₂-C₁₂-Halohydrocarbyloxy ist, wobei mindestens zwei Kohlenstoffatome die Halogen- und Sauerstoffatome trennen; und
Z₂ und Z₄ umfassen jeweils unabhängig voneinander Wasserstoff, Halogen, unsubstituiertes oder substituiertes C₁-C₁₂-Hydrocarbyl, vorausgesetzt, dass die Hydrocarbylgruppe nicht tertiäres Hydrocarbyl, C₁-C₁₂-Hydrocarbylthio, C₁-C₁₂-Hydrocarbyloxy oder C₂-C₁₂-Halohydrocarbyloxy ist, wobei mindestens zwei Kohlenstoffatome die Halogen- und Sauerstoffatome trennen.

4. Copolymerzusammensetzung nach einem der vorhergehenden Ansprüche, wobei das Copolymer ein Blockcopolymer ist, das von einer Dicyclopentadien-Copolymerkomponente der Formeln D1 oder D2 abgeleitet ist.

5. Copolymerzusammensetzung nach Anspruch 4, umfassend mindestens zwei A-Blöcke, die die Dicyclopentadien-Copolymerkomponente umfassen, wobei das Copolymer bevorzugt ein A-B-A-Triblockcopolymer ist.

6. Copolymerzusammensetzung nach Anspruch 4, umfassend mindestens zwei B-Blöcke, die die Polyphenylenether-Komponente umfassen, wobei das Copolymer bevorzugt ein B-A-B-Triblock-Copolymer ist.

7. Copolymer nach einem der Ansprüche 1 bis 3, umfassend ein Pfropfcopolymer, das von der Dicyclopentadien-Copolymerkomponente der Formeln D3-1, D3-2 oder D3-3 abgeleitet ist.

8. Copolymerzusammensetzung nach einem der vorhergehenden Ansprüche, wobei die Dicyclopentadien-Copolymerkomponente mindestens eine terminale funktionelle Gruppe umfasst, die umfasst eine terminale funktionelle Vinylbenzolethergruppe, eine terminale funktionelle Methacrylatgruppe, eine terminale funktionelle Acrylatgruppe, eine terminale funktionelle Epoxygruppe eine terminale funktionelle Hydroxylgruppe, eine terminale funktionelle Cyanatestergruppe, eine terminale funktionelle Amingruppe, eine terminale funktionelle Maleimidgruppe, eine terminale funktionelle Allylgruppe, eine terminale funktionelle Styrolgruppe, eine terminale funktionelle aktivierte Estergruppe oder eine terminale funktionelle Anhydridgruppe.

9. Verfahren zur Herstellung des Dicyclopentadien-Copolymers nach einem der Ansprüche 1 bis 8, wobei das Verfahren die kovalente Kopplung eines Dicyclopentadien-Vorläufers der Formeln P1, P2, P3-1, P3-2 oder P3-3 mit einem substituierten oder unsubstituierten einwertigen Phenol umfasst, wobei der Dicyclopentadien-Vorläufer und das monohydrische Phenol komplementäre reaktive Gruppen umfassen.

10. Verfahren zur Herstellung des Copolymers nach einem der Ansprüche 1 bis 8, wobei das Verfahren umfasst:
oxidative Polymerisation eines substituierten oder unsubstituierten monohydrischen Phenols aus einer Dicyclopentadien-Copolymerkomponente, um das Copolymer bereitzustellen; oder
kovalentes Koppeln eines Dicyclopentadien-Vorläufers der Formeln P1, P2, P3-1, P3-2 oder P3-3 und eines Polyphenylenether-Oligomers, wobei der Dicyclopentadien-Vorläufer und das Polyphenylenether-Oligomer komplementäre reaktive Gruppen umfassen.

11. Härtbare duroplastische Zusammensetzung, umfassend das Copolymer nach einem der Ansprüche 1 bis 8, und gegebenenfalls ferner umfassend
ein oder mehrere von einem Vernetzungsmittel, einem Härtungsmittel, einem Härtungskatalysator, einem Härtungsinitiator oder einer Kombination davon;
ein oder mehrere von einem Flammschutzmittel, einem Füllstoff, einem Kopplungsmittel oder einer Kombination davon;
oder eine Kombination davon.

12. Gehärtete duroplastische Zusammensetzung, umfassend ein gehärtetes Produkt der härtbaren duroplastischen Zusammensetzung nach Anspruch 11.

13. Gegenstand, umfassend die gehärtete duroplastische Zusammensetzung nach Anspruch 12, wobei der Gegenstand ein Verbundstoff, ein Schaum, eine Faser, eine Schicht, eine Beschichtung, ein Verkapselungsmittel, ein Haftmittel, ein Dichtungsmittel, ein Formteil, ein Prepreg, ein Gehäuse, ein Gussgegenstand, ein Laminat oder eine Kombination davon ist; oder
der Gegenstand ein metallüberzogenes Laminat, ein elektronischer Verbundstoff, ein struktureller Verbundstoff oder eine Kombination davon ist.

14. Lackzusammensetzung, umfassend die härtbare duroplastische Zusammensetzung nach Anspruch 11 und ein Lösungsmittel.

15. Aus der Lackzusammensetzung nach Anspruch 14 hergestellter Gegenstand, wobei der Gegenstand bevorzugt eine Faser, eine Schicht, eine Beschichtung, ein Gussgegenstand, ein Prepreg, ein Verbundstoff oder ein Laminat ist; oder wobei der Gegenstand ein metallüberzogenes Laminat ist.

## Revendications

1. Copolymère comprenant un composant d'éther de polyphénylène et un composant de copolymère de dicyclopentadiène présentant une structure des formules D1, D2, D3-1, D3-2 ou D3-3 : 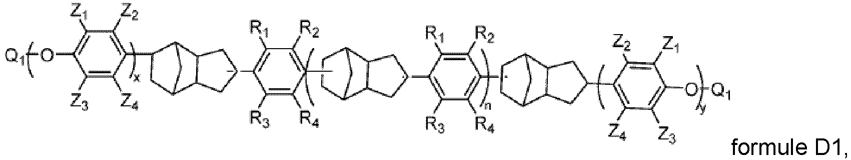 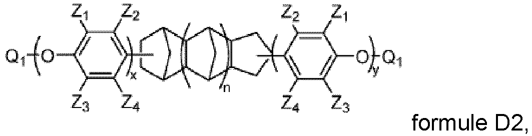 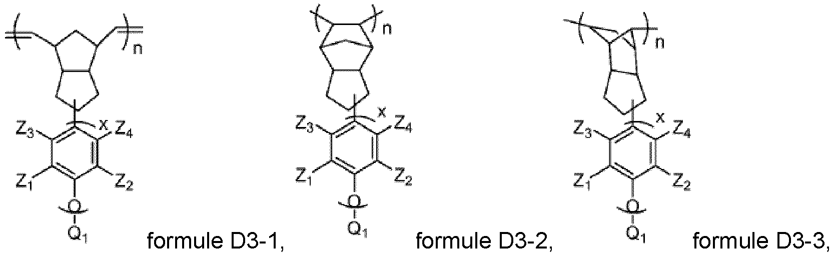 où :
chaque occurrence de Z₁ et Z₃ comprend indépendamment un halogène, un hydrocarbyle en C₁-C₁₂ substitué ou non substitué à condition que le groupe hydrocarbyle ne soit pas un hydrocarbyle tertiaire, un hydrocarbyle thio en C₁-C₁₂, un hydrocarbyloxy en C₁-C₁₂, ou un halohydrocarbyloxy en C₂-C₁₂ dans lequel au moins deux atomes de carbone séparent l'atome d'halogène et l'atome d'oxygène ;
chaque occurrence de Z₂ et Z₄ comprend indépendamment un hydrogène, un halogène, un hydrocarbyle en C₁-C₁₂ substitué ou non substitué à condition que le groupe hydrocarbyle ne soit pas un hydrocarbyle tertiaire, un hydrocarbyle thio en C₁-C₁₂, un hydrocarbyloxy en C₁-C₁₂ ou un halohydrocarbyloxy en C₂-C₁₂ dans lequel au moins deux atomes de carbone séparent l'atome d'halogène et l'atome d'oxygène ;
chaque occurrence de R₁ à R₄ comprend indépendamment un hydrogène, un hydrocarbyle en C₁-C₁₂ ou un hydrocarbyloxy en C₁-C₁₂ ;
x vaut au moins de 1 à 50 ;
y vaut au moins de 1 à 50 ;
n vaut au moins de 1 à 100 ; et
Q₁ comprend une liaison simple, un hydrogène ou un groupe fonctionnel terminal.

2. Composition copolymère selon la revendication 1, dans laquelle le composant de copolymère de dicyclopentadiène de la formule D1 est dérivé de la formule P1, le composant de copolymère de dicyclopentadiène de la formule D2 est dérivé de la formule P2, le composant de copolymère de dicyclopentadiène de la formule D3-1 est dérivé de la formule P3-1, le composant de copolymère de dicyclopentadiène de la formule D3-2 est dérivé de la formule P3-2, et le composant de copolymère de dicyclopentadiène de la formule D3-3 est dérivé de la formule P3-3, avec n valant de 1 à 100 :

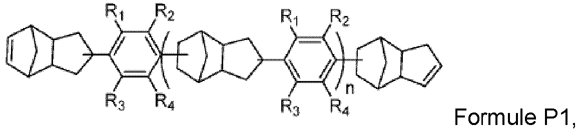

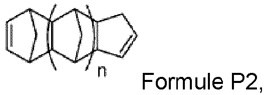

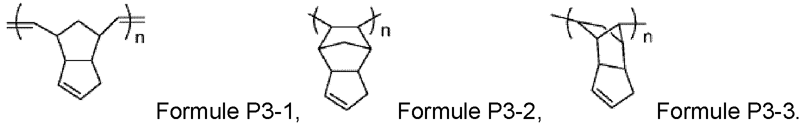

3. Composition copolymère selon la revendication 1 ou 2, dans laquelle le composant d'éther de polyphénylène a la structure suivante 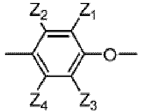
Z₁ et Z₃ comprennent chacun indépendamment un halogène, un hydrocarbyle en C₁-C₁₂ substitué ou non substitué à condition que le groupe hydrocarbyle ne soit pas un hydrocarbyle tertiaire, un hydrocarbyle thio en C₁-C₁₂, un hydrocarbyloxy en C₁-C₁₂, ou un halohydrocarbyloxy en C₂-C₁₂ dans lequel au moins deux atomes de carbone séparent l'atome d'halogène et l'atome d'oxygène ; et
Z₂ et Z₄ comprennent chacun indépendamment un hydrogène, un halogène, un hydrocarbyle en C₁-C₁₂ substitué ou non substitué à condition que le groupe hydrocarbyle ne soit pas un hydrocarbyle tertiaire, un hydrocarbyle thio en C₁-C₁₂, un hydrocarbyloxy en C₁-C₁₂ ou un halohydrocarbyloxy en C₂-C₁₂, dans lequel au moins deux atomes de carbone séparent l'atome d'halogène de l'atome d'oxygène.

4. Composition copolymère selon l'une quelconque des revendications précédentes, dans laquelle le copolymère est un copolymère à blocs dérivé d'un composant de copolymère de dicyclopentadiène des formules D1 ou D2.

5. Composition de copolymère selon la revendication 4, comprenant au moins deux blocs A comprenant le composant de copolymère dicyclopentadiène, de préférence dans laquelle le copolymère est un copolymère tribloc A-B-A.

6. Composition de copolymères selon la revendication 4, comprenant au moins deux blocs B comprenant le composant d'éther de polyphénylène, de préférence dans laquelle le copolymère est un copolymère tribloc B-A-B.

7. Copolymère selon l'une quelconque des revendications 1 à 3, comprenant un copolymère greffé dérivé du composant de copolymère de dicyclopentadiène des formules D3-1, .D3-2, ou D3-3.

8. Composition copolymère selon l'une quelconque des revendications précédentes dans laquelle le composant de copolymère dicyclopentadiène comprend au moins un groupe fonctionnel terminal comprenant un groupe fonctionnel terminal vinyl benzène éther, un groupe fonctionnel terminal méthacrylate, un groupe fonctionnel terminal acrylate, un groupe fonctionnel terminal époxy, un groupe fonctionnel terminal hydroxyle, un groupe fonctionnel terminal ester de cyanate, un groupe fonctionnel terminal amine, un groupe fonctionnel terminal maléimide, un groupe fonctionnel terminal allyle, un groupe fonctionnel terminal styrénique, un groupe fonctionnel terminal ester activé ou un groupe fonctionnel terminal anhydride.

9. Procédé de fabrication du copolymère de dicyclopentadiène selon l'une quelconque des revendications 1 à 8, le procédé comprenant le couplage covalent d'un précurseur de dicyclopentadiène des formules P1, P2, P3-1, P3-2, ou P3-3 avec un phénol monohydrique substitué ou non substitué, le précurseur de dicyclopentadiène et le phénol monohydrique comprenant des groupes réactifs complémentaires.

10. Procédé de fabrication du copolymère selon l'une quelconque des revendications 1 à 8, le procédé comprenant :
la polymérisation par oxydation d'un phénol monohydrique substitué ou non substitué d'un composant de copolymère dicyclopentadiène pour obtenir le copolymère ; ou
le couplage covalent d'un précurseur de dicyclopentadiène des formules P1, P2, P3-1, P3-2 ou P3-3 et d'un oligomère d'éther de polyphénylène, le précurseur de dicyclopentadiène et l'oligomère d'éther de polyphénylène comprenant des groupes réactifs complémentaires.

11. Composition thermodurcissable comprenant le copolymère selon l'une quelconque des revendications 1 à 8, et comprenant en outre à titre optionnel
un ou plusieurs parmi un agent de réticulation, un agent de durcissement, un catalyseur de durcissement, un initiateur de durcissement, ou une combinaison de ceux-ci ;
un ou plusieurs parmi un retardateur de flamme, une charge, un agent de couplage, ou une combinaison de ceux-ci ; ou
une combinaison de ces éléments.

12. Composition thermodurcie comprenant un produit durci de la composition thermodurcissable selon la revendication 11.

13. Article comprenant la composition thermodurcie selon la revendication 12, dans lequel
l'article est un composite, une mousse, une fibre, une couche, un revêtement, un encapsulant, un adhésif, un produit d'étanchéité, un composant moulé, un pré-imprégné, un boîtier, un article moulé, un stratifié, ou une combinaison de ceux-ci ; ou
l'article est un stratifié à revêtement métallique, un composite électronique, un composite structurel, ou une combinaison de ceux-ci.

14. Composition de vernis comprenant la composition thermodurcissable selon la revendication 11 et un solvant.

15. Article fabriqué à partir de la composition de vernis selon la revendication 14, de préférence dans lequel l'article est une fibre, une couche, un revêtement, un article moulé, un pré-imprégné, un composite ou un stratifié ; ou dans lequel l'article est un stratifié à revêtement métallique.
